(19)

Europäisches Patentamt
European Patent Office
Office européen des brevets

(11) **EP 4 664 960 A1**

(12) **EUROPEAN PATENT APPLICATION**
published in accordance with Art. 153(4) EPC

(43) Date of publication:
**17.12.2025 Bulletin 2025/51**

(21) Application number: **24771046.0**

(22) Date of filing: **16.01.2024**

(51) International Patent Classification (IPC):
**H04W 16/14** (2009.01)     **H04W 72/12** (2023.01)
**H04W 16/10** (2009.01)     **H04W 72/04** (2023.01)
**H04W 72/23** (2023.01)     **H04W 72/30** (2023.01)
**H04L 5/00** (2006.01)       **H04W 68/02** (2009.01)

(52) Cooperative Patent Classification (CPC):
**H04L 5/00; H04W 16/10; H04W 16/14;
H04W 68/02; H04W 72/04; H04W 72/12;
H04W 72/23; H04W 72/30**

(86) International application number:
**PCT/KR2024/000788**

(87) International publication number:
**WO 2024/191044 (19.09.2024 Gazette 2024/38)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **10.03.2023 KR 20230031766
15.03.2023 KR 20230033742**

(71) Applicant: **Samsung Electronics Co., Ltd.
Suwon-si, Gyeonggi-do 16677 (KR)**

(72) Inventors:
• **SHIN, Myeongcheol
  Suwon-si Gyeonggi-do 16677 (KR)**
• **SHIM, Seijoon
  Suwon-si Gyeonggi-do 16677 (KR)**

(74) Representative: **Gulde & Partner
Patent- und Rechtsanwaltskanzlei mbB
Berliner Freiheit 2
10785 Berlin (DE)**

(54) **APPARATUS AND METHOD FOR TRANSMITTING SIGNALS IN DYNAMIC SPECTRUM SHARING SYSTEM**

(57)     This method performed by a base station that supports dynamic spectrum sharing (DSS) for long term evolution (LTE) and new radio (NR) may comprise the processes of: mapping first downlink data associated with NR onto resource elements (REs) in the data region of a subframe; differentiating second partial data from first partial data, the first partial data having been mapped onto first REs based on a cell-specific reference signal (CRS) pattern associated with LTE, among the REs, and the second partial data having been mapped onto second REs that are different from the first REs; transmitting the second partial data in the second REs; after establishing a radio resource control (RRC) connection with a terminal associated with NR, mapping second downlink data onto fourth REs, which exclude third REs based on a CRS pattern associated with LTE among REs in the data region of a different subframe; and transmitting the second downlink data in the fourth REs.

FIG. 8

**Description**

**[Technical Field]**

The present disclosure relates to a device and a method for transmitting signals in a dynamic spectrum sharing (DSS) system.

**[Background Art]**

A device performing wireless communication may perform communication through various radio access technologies (RATs). Operators are required to build infrastructure to support a new radio access technology. To alleviate this burden, a dynamic spectrum sharing system for providing a service based on a plurality of wireless access technologies may be provided.

**[Disclosure]**

**[Technical Solution]**

In embodiments, a method performed by a device of a base station supporting dynamic spectrum sharing (DSS) for long term evolution (LTE) and new radio (NR) may comprise mapping first downlink data associated with the NR on resource elements (REs) in a data region of a subframe. The method may comprise identifying second partial data from among first partial data mapped to first REs according to a cell-specific reference signal (CRS) pattern associated with the LTE from among the REs, and the second partial data mapped to second REs different from the first REs. The first downlink data may include the first partial data and the second partial data. The method may comprise transmitting the second partial data on the second Res. The method may comprise, after establishing a radio resource control (RRC) connection with a terminal associated with the NR, mapping second downlink data on fourth REs excluding third REs according to a CRS pattern associated with the LTE, in REs of a data region in another subframe. The method may comprise transmitting the second downlink data on the fourth Res. The first downlink data may include a random access response (RAR), paging, or a system information block.

In embodiments, a device of a base station supporting dynamic spectrum sharing (DSS) for long term evolution (LTE) and new radio (NR) may comprise a transceiver. The device may comprise a processor operatively coupled with the transceiver. The processor may be configured to map first downlink data associated with the NR on resource elements (REs) in a data region of a subframe. The processor may be configured to identify second partial data from among first partial data mapped to first REs according to a cell-specific reference signal (CRS) pattern associated with the LTE from among the REs, and the second partial data mapped to second REs different from the first REs. The first downlink data may include the first partial data and the second partial data. The processor may be configured to transmit the second partial data on the second REs. The processor may be configured to, after establishing a radio resource control (RRC) connection with a terminal associated with the NR, map second downlink data on fourth REs excluding third REs according to a CRS pattern associated with the LTE, in REs of a data region in another subframe. The processor may be configured to transmit the second downlink data on the fourth REs. The first downlink data may include a random access response (RAR), paging, or a system information block.

In embodiments, a method performed by a device of a base station supporting dynamic spectrum sharing (DSS) for long term evolution (LTE) and new radio (NR) may comprise identifying, based on a radio resource control (RRC) connection state of a terminal associated with the NR, whether rate matching according to a cell-specific reference signal (CRS) pattern associated with the LTE is performed on downlink data associated with the NR. The method may comprise mapping, in a case that the rate matching is performed on the downlink data, the downlink data sequentially on second REs excluding first REs according to the CRS pattern from among resource elements (REs) of a data region in a subframe. The method may comprise mapping, in a case that the rate matching is not performed on the downlink data, mapping, the downlink data sequentially on the first REs and the second REs according to the CRS pattern from among the REs of the data region. The method may comprise transmitting the downlink data on the second REs.

**[Description of the Drawings]**

FIG. 1 illustrates an example of a wireless communication system.
FIG. 2 illustrates an example of a base station supporting dynamic spectrum sharing (DSS) for long term evolution (LTE) and new radio (NR).

FIG. 3 illustrates an example of a resource structure in a time domain and a frequency domain.

FIG. 4 illustrates an example of mapping a synchronization signal block (SSB) in multimedia broadcast single frequency network (MBSFN) subframe.

FIG. 5A illustrates an example of a method of mapping downlink data associated with NR in a regular subframe.

FIG. 5B illustrates an example of a method of mapping downlink data based on a cell-specific reference signal (CRS) pattern associated with LTE in DSS.

FIG. 6 illustrates an example of an operation of a terminal and a base station performing an initial access.

FIG. 7A illustrates an example of a radio frame for DSS.

FIG. 7B illustrates an example of a section in which random access channel (RACH) transmission is possible in a radio frame for DSS.

FIG. 8 illustrates an example of an operation flow of a method for transmitting downlink data in DSS.

FIG. 9 illustrates an example of a method of mapping downlink data in a case that rate matching is not performed in a regular subframe in DSS.

FIG. 10 illustrates an example of an operation flow for a method of transmitting downlink data according to an RRC connection state in DSS.

FIG. 11 illustrates an example in which a transmission timing of RAR is changed in a radio frame for DSS.

FIG. 12 illustrates an example of a functional configuration of a terminal.

FIG. 13 illustrates an example of a functional configuration of a base station.

**[Mode for Invention]**

Terms used in the present disclosure are used only to describe a specific embodiment, and may not be intended to limit a range of another embodiment. A singular expression may include a plural expression unless the context clearly means otherwise. Terms used herein, including a technical or a scientific term, may have the same meaning as those generally understood by a person with ordinary skill in the art described in the present disclosure. Among the terms used in the present disclosure, terms defined in a general dictionary may be interpreted as identical or similar meaning to the contextual meaning of the relevant technology and are not interpreted as ideal or excessively formal meaning unless explicitly defined in the present disclosure. In some cases, even terms defined in the present disclosure may not be interpreted to exclude embodiments of the present disclosure.

In various embodiments of the present disclosure described below, a hardware approach will be described as an example. However, since the various embodiments of the present disclosure include technology that uses both hardware and software, the various embodiments of the present disclosure do not exclude a software-based approach.

A term referring to a signal (e.g., signal, information, symbol, message, signaling, reference signal (RS), or data), a term referring to a resource (e.g., symbol, slot, subframe, radio frame, subcarrier, resource element (RE), resource block (RB), bandwidth part (BWP), or occasion), a term for a calculation state (e.g., step, operation, or procedure), a term referring to data (e.g., packet, user stream, information, bit, symbol, or codeword), a term referring to a channel, a term referring to a component of an electronic device, and the like, that are used in the following explanation, are exemplified for convenience of explanation. Therefore, the present disclosure is not limited to terms to be described below, and another term having an equivalent technical meaning may be used.

In addition, in the present disclosure, the term 'greater than' or 'less than' may be used to determine whether a particular condition is satisfied or fulfilled, but this is only a description to express an example and does not exclude description of 'greater than or equal to' or 'less than or equal to'. A condition described as 'greater than or equal to' may be replaced with 'greater than', a condition described as 'less than or equal to' may be replaced with 'less than', and a condition described as 'greater than or equal to and less than' may be replaced with 'greater than and less than or equal to'. In addition, hereinafter, 'A' to 'B' refers to at least one of elements from A (including A) to B (including B). Hereinafter, 'C' and/or 'D' means including at least one of 'C' or 'D', that is, {'C', 'D', and 'C' and 'D'}.

The present disclosure describes embodiments using terms used in some communication standards (e.g., 3rd Generation Partnership Project (3GPP)), but this is only an example for explanation. The embodiments of the present disclosure may be applied to other communication and broadcasting systems.

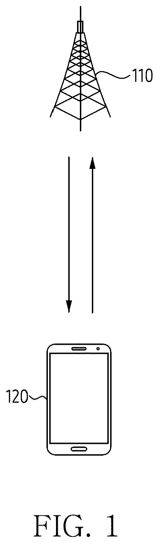

FIG. 1 illustrates an example of a wireless communication system.

Referring to FIG. 1, FIG. 1 illustrates a base station 110 and a terminal 120 as a portion of nodes using a wireless channel in the wireless communication system. Although FIG. 1 illustrates only one base station, the wireless communication system may further include another base station identical to or similar to the base station 110.

The base station 110 is a network infrastructure for providing wireless access to the terminal 120. The base station 110 has coverage defined based on a distance at which a signal may be transmitted. In addition to a base station, the base station 110 may be referred to as an 'access point (AP)', an 'enode B (eNB)', a '5th generation node (5G node)', a 'next generation node B (gNB)', a 'wireless point', a 'transmission/reception point (TRP)', or another term having an equivalent technical meaning thereof.

The terminal 120, which is a device used by a user, performs communication with the base station 110 through the wireless channel. A link from the base station 110 to the terminal 120 is referred to as downlink (DL), and a link from the terminal 120 to the base station 110 is referred to as uplink (UL). In addition, although not illustrated in FIG. 1, the terminal 120 and another terminal (not illustrated) may perform communication with each other through the wireless channel. In this case, a device-to-device link (D2D) between the terminal 120 and the other terminal is referred to as a sidelink, and the sidelink may be used interchangeably with a PC5 interface. In an embodiment, the terminal 120 may be operated without user involvement. According to an embodiment, the terminal 120 is a device that performs machine type communication (MTC), and may not be carried by the user. In addition, according to an embodiment, the terminal 120 may be a narrowband (NB)- internet of things (IoT) device.

In addition to a terminal, the terminal 120 may be referred to as 'user equipment (UE)', 'customer premises equipment (CPE)', a 'mobile station', a 'subscriber station', a 'remote terminal', a 'wireless terminal', an 'electronic device', or another term having an equivalent technical meaning thereof.

The terminal 120 may perform communication with the base station 110 by using at least one of a plurality of RATs. For example, the terminal 120 may perform communication with the base station 110 based on long term evolution (LTE). For example, the terminal 120 may perform communication with the base station 110 based on an evolved universal mobile telecommunication system (UMTS) terrestrial radio access (E-UTRA) network. For example, the terminal 120 may perform communication with the base station 110 based on 5th generation (5G). For example, the terminal 120 may perform communication with the base station 110 based on a new radio (NR) network.

A communication node (e.g., a terminal, a base station, or an entity of a core network) according to various embodiments of the present disclosure may operate in an LTE communication system. In addition, a communication node (e.g., a terminal, a base station, or an entity of a core network) according to various embodiments of the present disclosure may operate in an NR communication system. Furthermore, a communication node (e.g., a terminal, a base station, or an entity of a core network) according to various embodiments of the present disclosure may operate in both the LTE communication system and the NR communication system. Although not illustrated in FIG. 1, the base station 110 may be connected to an evolved packet core (EPC) network, which is a core of a 4G network, or a 5th generation core (5GC) network.

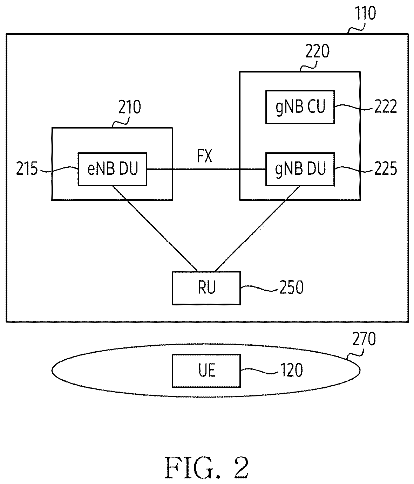

Conventionally, in a communication system with a relatively large cell radius of a base station, each base station has been installed to include a function of a digital processing unit (or digital unit (DU)) and a radio frequency (RF) processing unit (or radio unit (RU)). However, as a high frequency band is used in 4th generation (4G) and/or a subsequent communication system and the cell radius of the base station decreases, the number of base stations to cover a specific region has increased. In addition, a burden of installation cost for an operator to install the increased base stations has increased. In order to minimize the installation cost of the base station, a structure has been proposed in which one or more RUs are connected to one DU through a wired network as the DU and the RU of the base station are separated, and one or more topologically distributed RUs are disposed to cover the specific region. Hereinafter, a disposition structure and extension examples of the base station according to various embodiments of the present disclosure will be described with reference to FIG. 2.

FIG. 2 illustrates an example of a base station supporting dynamic spectrum sharing (DSS) for long term evolution (LTE) and new radio (NR). In FIG. 2, a situation in which the base station 110 of FIG. 1 is separately implemented as DU and RU is described. For example, the base station 110 may include a first node 210 and RU 250. The base station 110 may include a second node 220 and the RU 250.

Referring to FIG. 2, the first node 210 may include eNB DU 215. The eNB DU 215 of the first node 210 may be connected to the RU 250. The RU 250 is eNB RU and may function as a portion of the first node 210. The second node 220 may include gNB-CU 222 and gNB DU 225. The gNB DU 225 of the second node 220 may be connected to the RU 250. In FIG. 2, the gNB CU 222 and the gNB DU 225 are illustrated, but this disposition structure does not limit an embodiment of the present disclosure. That is, the gNB CU 222 and the gNB DU 225 are DU for an NR communication system and may be configured as one functional entity.

The second node 220 may perform communication with the first node 210 through an FX interface. For example, communication between the eNB DU 215 and the gNB DU 225 may be performed. As the gNB DU 225 for the NR is additionally connected in the base station 110 for the LTE, the RU 250 may provide not only an LTE cell but also an NR cell to a terminal 270. The base station 110 may flexibly allocate spectrum to the terminal 120 in various frequency bands through dynamic switching between the LTE and the NR according to traffic demand. According to the flexible spectrum allocation, high communication performance and a stable communication range may be provided to the terminal 120.

Although a structure in which the CU and the DU are separated has been exemplarily described, the separated structure is only an example of implementation and does not limit embodiments of the present disclosure. That is, a situation in which the DU directly provides a cell to the terminal without separation of the CU and the DU may also be understood as an embodiment of the present disclosure. In addition, in FIG. 2, each node and entity is illustrated as an independent configuration to explain a scenario of spectrum sharing, but this is only an example for explaining the functional separation, and such illustration should not be construed as limiting the embodiments of the present disclosure.

Each entity may be a physically independent device, or may be in a form of software implemented to perform another function.

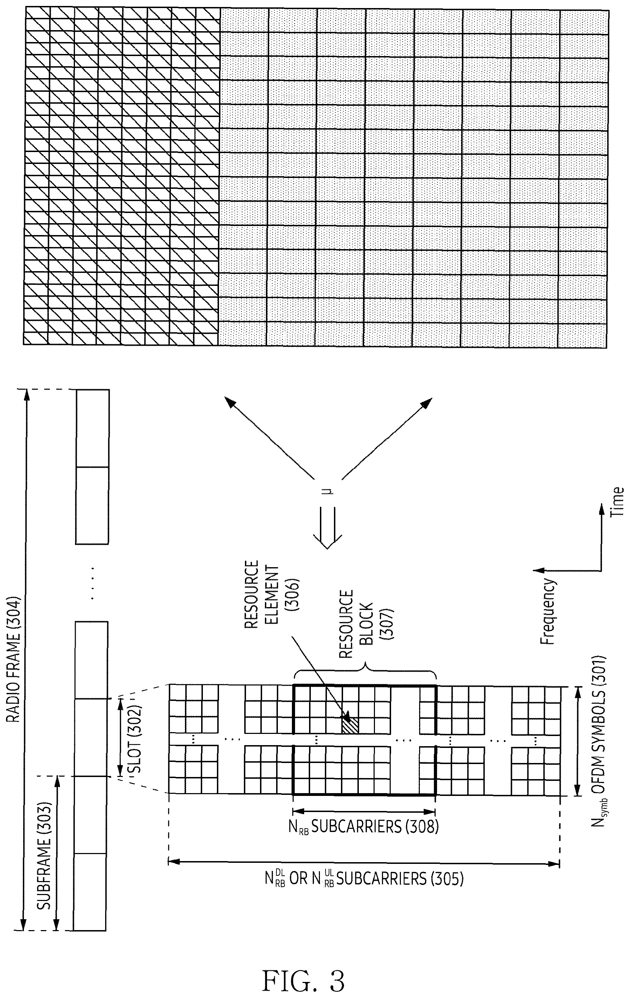

FIG. 3 illustrates an example of a resource structure in a time domain and a frequency domain.

An example of the resource structure of FIG. 3 may indicate a resource structure in a time-frequency domain. For convenience of explanation, the example of the resource structure illustrates an example of a resource structure of an NR communication system, but an embodiment of the present disclosure is not limited thereto. For example, the resource structure may be applied to a resource structure for another communication system (e.g., LTE communication system). Specific details related to this will be described later.

Referring to FIG. 3, in a radio resource region, a horizontal axis indicates a time domain and a vertical axis indicates a frequency domain. A length of a radio frame 304 is 10 ms. The radio frame 304 may be a time domain section configured with 10 subframes. A length of a subframe 303 is 1 ms. A component unit in the time domain may be an orthogonal frequency division multiplexing (OFDM) and/or discrete Fourier transform (DFT)-spread-OFDM (DFT-s-OFDM) symbols, and $N_{symb}$ OFDM and/or DFT-s-OFDM symbols 301 may be gathered to form one slot 302. For example, the OFDM symbol may include a symbol with respect to a case of transmitting and receiving signals using an OFDM multiplexing method, and the DFT-s-OFDM symbol may include a symbol with respect to a case of transmitting and receiving signals using DFT-s-OFDM or single carrier frequency division multiple access (SC-FDMA) multiplexing method. The minimum transmission unit in the frequency domain is a subcarrier, and a carrier bandwidth configuring a resource grid may be configured with a total of $N_{RB}^{DL}$ or $N_{RB}^{UL}$ subcarriers 305. In addition, in the present disclosure, an embodiment of downlink signal transmission/reception is described for convenience of explanation, but this is also applicable to an embodiment of uplink signal transmission/reception.

For example, the number of the slots 302 configuring one subframe 303 and a length of the slot 302 may vary according to a subcarrier spacing. This subcarrier spacing may be referred to as numerology $\mu$. That is, a subcarrier spacing, the number of slots included in a subframe, a length of the slot, and a length of the subframe may be variably configured. For example, in a case that a subcarrier spacing (SCS) is 15 kHz in the NR communication system, one slot 302 configures one subframe 303, and length of the slot 302 and the subframe 303 may be 1 ms, respectively. In addition, for example, in a case that a subcarrier spacing is 30 kHz, two slots may configure one subframe 303. In this case, a length of the slot is 0.5 ms and a length of the subframe is 1 ms.

Alternatively, according to a communication system (e.g., LTE or NR), a subcarrier spacing, the number of slots included in a subframe, a length of the slot, and a length of the subframe may be variably applied. For example, in a case of the LTE communication system, a subcarrier spacing is 15 kHz, and two slots configure one subframe, in this case a length of the slot may be 0.5 ms and a length of the subframe may be 1 ms. For another example, in a case of the NR communication system, the subcarrier spacing $\mu$ may be one of 15 kHz, 30 kHz, 60 kHz, 120 kHz, and 240 kHz, and the number of slots included in one subframe according to the subcarrier spacing $\mu$ may be 1, 2, 4, 8, or 16.

A basic unit of a resource in the time-frequency domain may be a resource element (RE) 306, and the resource element 306 may be represented by an OFDM symbol index and a subcarrier index. A resource block 307 may include a plurality of resource elements 306. In the NR communication system, the resource block (RB) (or a physical resource block (PRB)) 307 may be defined as $N_{RB}$ consecutive subcarriers 308 in the frequency domain. The number of subcarriers 308 may be $N_{RB}=12$. The frequency domain may include common resource blocks (CRBs). The physical resource block (PRB) may be defined in a bandwidth part (BWP) on the frequency domain. CRB and PRB numbers may be determined differently according to a subcarrier spacing. In the LTE communication system, the RB may be defined as $N_{symb}$ consecutive OFDM symbols in the time domain and the $N_{RB}$ consecutive subcarriers 308 in the frequency domain.

With the introduction of the 4G long term evolution (LTE) communication system, a desire for high-speed data communication has increased due to an increase in an Internet service using a mobile device. A system with higher reliability and lower response delay has been required to support various services such as Internet of Things, vehicle-to-vehicle communication, a server-based high-resolution game, and the like. As a result, a 5G new radio (NR) communication system that provides fast transmission speed and a new service has been standardized using frequency bands of about 3.5 GHz and 6 GHz, as well as ultra-high frequency bands called millimeter waves such as about 28 GHz and 39 GHz.

In a 5G mobile communication standard, technologies to meet a service support and performance requirements of an enhanced mobile broad band (eMBB) service, ultra-reliable low-latency communications (URLLC), and massive machine-type communications (mMTC), may be used. For example, the technologies may include beamforming and massive multiple input multiple output (massive MIMO) to mitigate propagation path loss in an ultra-high frequency band and increase a propagation distance, various numerology support for efficient utilization of an ultra-high frequency resource, dynamic operation for a slot format, multi-beam transmission, and initial access technology to support broadband. Additionally, the technologies may include new channel coding methods, such as a definition and operation of a bandwidth part (BWP), a low density parity check (LDPC) code for large-capacity data transmission, and a polar code for reliable transmission of control information.

As described above, the 5G communication system may provide a user with an improved wireless communication environment than the 4G communication system based on low response delay, a high data transmission rate, and high reliability. In order to provide an improved service, a service operator needs a lot of costs to expand network design, network, base station, and wireless equipment (e.g., radio unit (RU)) suitable for a frequency band for 5G. Dynamic spectrum sharing (DSS) technology has been proposed to address this cost burden and to service 5G in the 4G frequency band in a transition from the 4G communication system to the 5G communication system. The dynamic spectrum sharing technology may simultaneously support the 5G service and the 4G service as one RU (e.g., the RU 250 of FIG. 2) by utilizing an LTE frequency band of a network to which the LTE is serviced. Accordingly, flexible generational movement from the 4G to the 5G is possible, and the operator may provide the 5G service without significant additional cost consumption.

The dynamic spectrum sharing may indicate a technique in which different RATs share substantially the same frequency band (or spectrum). For example, the dynamic spectrum sharing may include DSS for the NR and the LTE. Hereinafter, for convenience of explanation, the DSS for the NR and the LTE will be described as an example, but an embodiment of the present disclosure will not be limitedly interpreted.

The dynamic spectrum sharing for the NR and the LTE may provide a service for the NR through a frequency band used by the LTE as the NR and the LTE share substantially the same frequency band. In order for the NR and the LTE to share a spectrum, two systems may use the same numerology. In other words, for a resource structure of the NR, numerology in which SCS is 15 KHz, a length of a slot is 1 ms, and a length of a radio frame is 10 ms, may be used to support the DSS. In addition, the LTE is a communication system developed before the NR, so in order for the NR communication system to share the spectrum of LTE, resource allocation should be made so that a physical channel associated with the NR does not affect a physical channel associated with the LTE. The physical channel associated with the NR may indicate a physical channel for providing a service based on the NR. The physical channel associated with the LTE may indicate a physical channel for providing a service based on the LTE.

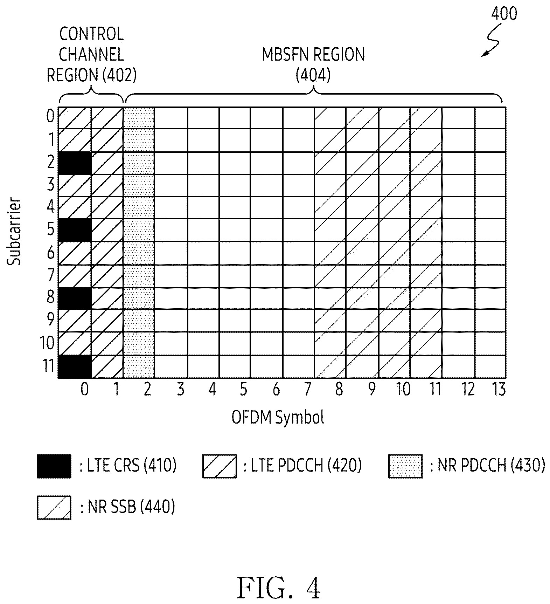

For example, a cell-specific reference signal (CRS), which is a reference signal of the LTE communication system, may be transmitted through all resource blocks (RBs) of all subframes for the LTE. Since the CRS is an important reference signal used for channel estimation of the terminal and signal quality measurement of a cell, signals associated with the NR should be allocated to a resource region excluding a resource region to which the CRS is mapped from among resource regions of the NR physical channel. As an example of the NR physical channel, a synchronization signal block (SSB), which includes a synchronization signal and a master information block (MIB), by which the terminal obtains cell information in the NR communication system, may be mapped to 20 consecutive RBs and 4 OFDM symbols. In a case of allocating the SSB to a regular (normal) LTE subframe (hereinafter, referred to as a regular subframe) including the CRS, the SSB and the CRS may collide. This collision may be solved by setting up an LTE multimedia broadcast single frequency network (MBSFN) subframe (hereinafter, an MBSFN subframe) in a cell for the LTE, and then allocating the SSB in the MBSFN subframe. An example of mapping the SSB in the MBSFN subframe will be described in FIG. 4.

FIG. 4 illustrates an example of mapping a synchronization signal block (SSB) in multimedia broadcast single frequency network (MBSFN) subframe.

The MBSFN subframe may indicate at least one subframe for MBSFN from among a plurality of subframes included in a radio frame. For example, one radio frame may include 10 subframes. Among the 10 subframes, other subframes other than the at least one MBSFN subframe may be referred to as a regular (or normal) subframe or a non-MBSFN subframe.

FIG. 4 illustrates an example of an MBSFN subframe 400. Referring to FIG. 4, the MBSFN subframe 400 may include a control channel area (or region) 402 and an MBSFN region 404. The control channel region 402 may be referred to as a control region.

For example, CRS 410 associated with LTE and a physical downlink control channel (PDCCH) 420 associated with the LTE may be mapped to the control channel region 402. For example, the control channel region 402 may include REs of two OFDM symbol (hereinafter, symbol) sections. For example, the CRS 410 may be mapped to the 2nd, the 5th, the 8th, and the 11th REs in the 0th OFDM symbol section among the control channel region 402. In addition, the PDCCH 420 may be mapped to remaining REs excluding the REs to which the CRS 410 is mapped in the control channel region 402. However, an embodiment of the present disclosure is not limited thereto. For example, the control channel region 402 may include a physical hybrid automatic repeat and request indicator channel (PHICH) and a physical control format indicator channel (PCFICH). The control channel region 402 may not be a transmission section for the MBSFN within the MBSFN subframe 400. The control channel region 402 may be referred to as a non-MBSFN area (or a non-MBSFN region).

For example, PDCCH 430 associated with NR and SSB 440 associated with NR may be mapped to the MBSFN region 404. For example, the MBSFN region 404 may include REs of 12 symbol sections between the 2nd and the 13th. For example, the PDCCH 430 may be mapped to REs of the 2nd symbol section of the MBSFN region 404. Also, the SSB 440 may be mapped to REs of the 8th to the 11th symbol sections of the MBSFN region 404. However, the embodiment of the present disclosure is not limited thereto. For example, the MBSFN region 404 may include a physical downlink shared channel (PDSCH) including downlink data associated with the NR.

Referring to the above, the CRS 410 may be mapped only to the control channel region 402 in the MBSFN subframe 400, and the CRS 410 may not be mapped to the MBSFN region 404. Accordingly, even if a base station (e.g., the base station 110 of FIG. 1 or the second node 220 of FIG. 2) for the NR allocates the SSB 440 in the MBSFN region 404, the CRS 410 and the SSB 440 may not collide.

In an NR communication system supporting 15 kHz SCS, the SSB may be transmitted in the 0th, the 1st, the 5th, and the 6th subframes from among one radio frame including the 0th to the 9th subframes. In addition, the MBSFN subframe 400 may be set among the 1st, the 2nd, the 3rd, the 6th, the 7th, and the 8th subframes among the one radio frame. Therefore, in a DSS system, the 1st and the 6th subframes in the one radio frame may be set as the MBSFN subframe 400, and the SSB may be transmitted through the 1st and the 6th subframes.

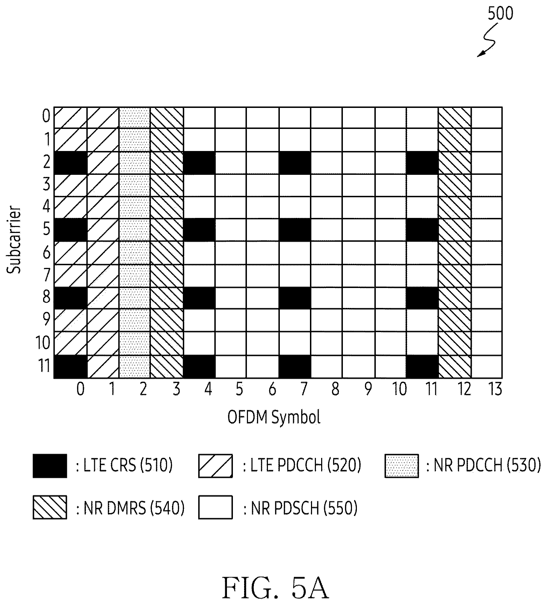

Referring to FIG. 4, NR physical channels other than SSB may be freely allocated to the MBSFN region 404. In terms of the NR communication system, the MBSFN region 404 has an advantage of high utilization, but in terms of the LTE communication system, it may have a disadvantage in that a provision of LTE service is restricted. Therefore, a true DSS in which the NR and the LTE share frequency resources in the same subframe may be achieved by allocating an NR physical channel to a regular subframe different from the MBSFN subframe 400. An example of allocating the NR physical channel to the regular subframe will be described below with reference to FIG. 5A.

A mapping state of various channels for REs in the MBSFN subframe 400 of FIG. 4 is only exemplary, and the embodiment of the present disclosure is not limited thereto. For example, the PDCCH 430 may not be mapped to the MBSFN region 404, and the SSB 440 may be mapped over different symbol sections.

FIG. 5A illustrates an example of a method of mapping downlink data associated with NR in a regular subframe.

The regular subframe may indicate a subframe other than at least one subframe for MBSFN from among a plurality of subframes included in a radio frame. For example, one radio frame may include 10 subframes. The regular subframe may be referred to as a non-MBSFN subframe.

Referring to FIG. 5A, an example in which an NR physical channel and an LTE physical channel are allocated in a regular subframe 500 of a DSS system for NR and LTE is illustrated. Referring to FIG. 5A, the regular subframe 500 may include a control region and a data region.

For example, CRS 510 associated with the LTE, PDCCH 520 associated with the LTE, and PDCCH 530 associated with the NR may be mapped to the control region. For example, the control region may include REs of three OFDM symbol (hereinafter, symbol) sections corresponding to the 0th to the 2nd. For example, the CRS 510 may be mapped to the 2nd, the 5th, the 8th, and the 11th REs in the 0th OFDM symbol section from among the control region. In addition, the PDCCH 520 may be mapped to remaining REs excluding REs to which CRS 510 is mapped from among REs corresponding to symbols of the 0th to the 1st in the control region. Also, the PDCCH 530 may be mapped to REs corresponding to the 2nd symbol from among the control region.

For example, the data region may include the CRS 510, a demodulation reference signal (DMRS) 540 associated with the NR, and PDSCH 550 associated with the NR. For example, the data region may include REs of 11 symbol sections corresponding to the 3rd to the 13th. For example, the DMRS 540 may be mapped to REs corresponding to the 3rd symbol and the 12th symbol from among the data region. For example, the CRS 510 may be mapped to the 2nd, the 5th, the 8th, and the 11th REs in the 4th symbol section from among the data region. For example, the CRS 510 may be mapped to the 2nd, the 5th, the 8th, and the 11th REs in the 7th symbol section from among the data region. For example, the CRS 510 may be mapped to the 2nd, the 5th, the 8th, and the 11th REs in the 11th symbol section from among the data region. In addition, the PDSCH 550 may be mapped to remaining REs to which the CRS 510 and the DMRS 540 are not mapped from among the data region.

Referring to FIG. 5A, the PDSCH 550 may be transmitted in the same symbol and the same RB (or REs in the regular subframe 500 in an example of FIG. 5A) as the CRS 510, but it should be mapped so as not to overlap the same RE. This is because the CRS 510 is a reference signal defined in the LTE, and transmission of the CRS 510 should not be restricted by the PDSCH 550 for the NR. Therefore, a base station (e.g., the base station 110 of FIG. 1) needs to perform rate matching on REs to which the CRS 510 (or CRS pattern) is not mapped in order to transmit the PDSCH 550. The CRS pattern may indicate a pattern to which the CRS 510 is mapped. The rate matching may indicate that the PDSCH 550 is mapped to REs positioned around the CRS 510. In other words, the rate matching may indicate that the base station maps the PDSCH 550 to the REs by avoiding the REs to which the CRS 510 is mapped.

A mapping state of various channels for REs in the regular subframe 500 of FIG. 5A is only exemplary, and the embodiment of the present disclosure is not limited thereto. For example, based on a CRS pattern different from the CRS pattern, the CRS 510 may be mapped to REs different from the REs according to the CRS pattern.

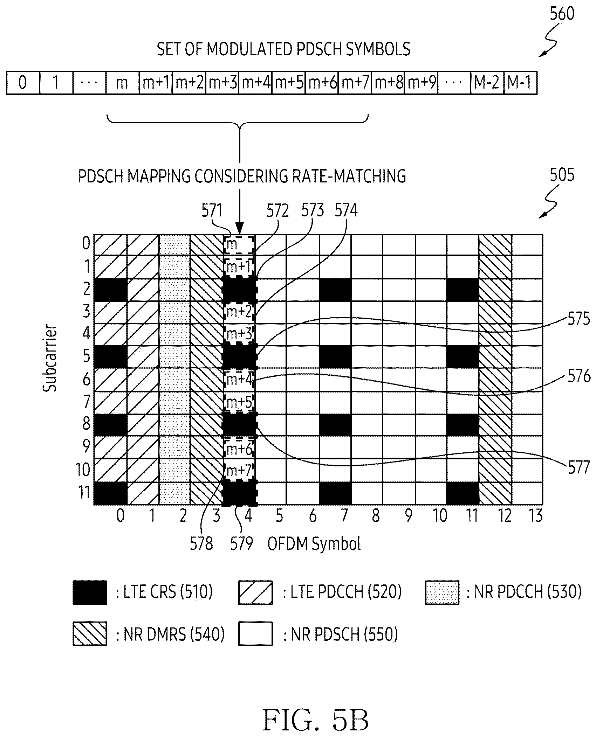

FIG. 5B illustrates an example of a method of mapping downlink data based on a cell-specific reference signal (CRS) pattern associated with LTE in DSS.

A regular subframe 505 of FIG. 5B may be an example of the regular subframe 500 of FIG. 5A. For example, the regular subframe 505 may include a control region and a data region. For example, CRS 510 associated with the LTE, PDCCH 520 associated with the LTE, and PDCCH 530 associated with NR may be mapped to the control region. For example, the data region may include the CRS 510, a demodulation reference signal (DMRS) 540 associated with the NR, and PDSCH 550 associated with NR.

Referring to FIG. 5B, a set 560 of modulated PSDCH symbols may be sequentially mapped to REs to which the CRS 510 is mapped and other REs from among REs in the data region. Hereinafter, the REs to which the CRS 510 is mapped may be referred to as first REs. Hereinafter, among the REs in the data region, the other REs excluding the first REs may be referred to as second REs. For example, the set 560 may be sequentially mapped to the second REs excluding the first REs according to a pattern of the CRS 510 (hereinafter, referred to as a CRS pattern) based on performing rate matching. For example, a base station (e.g., the base station 110 of FIG. 1) may generate M modulation symbols through quadrature amplitude modulation (QAM) modulation after performing low density parity check (LDPC) channel coding on a transport block. The QAM modulation is merely an example of a modulation scheme, and the present disclosure should not be construed as being limited thereto. The base station 110 may perform precoding based on a characteristic of a radio channel on the modulation symbols. However, in the present disclosure below, for convenience of explanation, precoding of the modulation symbols is not considered. The M may indicate a sum of the number of the second REs excluding the first REs reserved for the CRS 510 from among REs allocated to PDSCH in a subframe. The REs allocated to the PDSCH may indicate an entire REs of the data region.

Referring to FIG. 5B, the mth to the m+7th PDSCH symbols from among the set 560 may be sequentially mapped to REs in the 4th symbol section. The mth PDSCH symbol may refer to a PDSCH symbol having an index of m. For example, the CRS 510 may be mapped to RE 573, RE 575, RE 577, and RE 579 from among the REs in the 4th symbol section. For example, the mth PDSCH symbol may be mapped to RE 571. In addition, with respect to RE 572 continuous with the RE 571, the m+1th PDSCH symbol may be sequentially mapped. For example, the m+2 and the m+3 PDSCH symbols may be sequentially mapped to REs 574 between the RE 573 and the RE 575, to which the CRS 510 is mapped. For example, the m+4th and the m+5th PDSCH symbols may be sequentially mapped to REs 576 between the RE 575 and the RE 577, to which the CRS 510 is mapped. For example, the m+6 and the m+7 PDSCH symbols may be sequentially mapped to REs 578 between the RE 577 and the RE 579, to which the CRS 510 is mapped. Referring to the above, based on the rate matching being performed, downlink data (or the set 560 generated based on the downlink data) may be sequentially mapped to the second REs excluding the first REs to which the CRS 510 is mapped from among the REs in the data region.

FIG. 5B illustrates a sequential mapping operation based on the rate matching for the REs in the 4th symbol section, but an embodiment of the present disclosure is not limited thereto. For example, the mapping operation for the REs may be equally applied to all OFDM symbols and all RBs to which PDSCH is allocated.

Referring to FIGS. 5A and 5B, the base station (e.g., the base station 110 of FIG. 1) and a terminal (e.g., the terminal 120 of FIG. 1) may identify positions of the first REs to which the CRS 510 is allocated in a subframe, based on an RRC parameter obtained based on radio resource control (RRC) signaling. For example, the RRC parameter may include RateMatchPatternLTE-CRS. For example, a physical layer (PHY) of the base station 110 (i.e., the base station) may easily obtain the RRC parameter from a higher layer. However, a physical layer of the terminal 120 (i.e., the terminal) may obtain the RRC parameter through an RRC access procedure with the base station 110. Information included in the Rate-MatchPatternLTE-CRS is as follows.

```
RateMatchPatternLTE-CRS ::= SEQUENCE {

    carrierFreqDL              INTEGER (0..16383),

    carrierBandwidthDL              ENUMERATED {n6, n15, n25, n50, n75, n100, spare2,
spare1},

    mbsfn-SubframeConfigList        EUTRA-MBSFN-SubframeConfigList OPTIONAL,

    nrofCRS-Ports              ENUMERATED {n1, n2, n4},

    v-Shift              ENUMERATED {n0, n1, n2, n3, n4, n5}

    }
```

The carrierFreqDL may indicate a center frequency of an LTE carrier. The carrierBandwidthDL may indicate a bandwidth of the LTE carrier indicated by the number of physical resource blocks (PRBs). The mbsfn-SubframeConfigList may indicate setup information for an LTE MBSFN subframe. For example, the mbsfn-SubframeConfigList may indicate a temporal position of the LTE MBSFN subframe. The nrofCRS-Ports may indicate the number of LTE CRS antenna ports to perform the rate matching. The v-shift may indicate a shifting value in LTE to perform the rate matching around LTE-CRS. For example, the v-shift may indicate an RE position to which the CRS is mapped in RB.

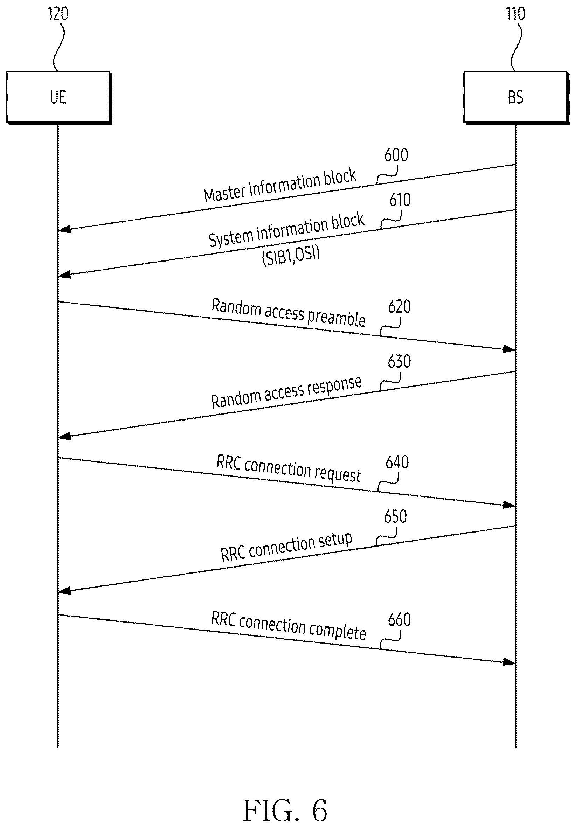

Referring to the above, the RRC parameter may be transmitted through a message obtained during the RRC access procedure. In other words, the terminal 120 (e.g., an RRC idle state (RRC_idle)) before an RRC connected state (RRC_connected) may not identify a position of RE to which the CRS is mapped. In order to obtain the RRC parameter, an initial access procedure performed by the terminal 120 with the base station 110 will be described in detail in FIG. 6.

FIG. 6 illustrates an example of an operation of a terminal and a base station performing an initial access.

The initial access may indicate a procedure for the terminal (e.g., the terminal 120 of FIG. 1) in an RRC idle state to perform a transition to an RRC connection state with the base station (e.g., the base station 110 of FIG. 1). User equipment (UE) 120 of FIG. 6 may indicate an example of the terminal 120 of FIG. 1. A base station (BS) 110 of FIG. 6 may indicate an example of the base station 110 of FIG. 1.

Referring to FIG. 6, the base station 110 may broadcast a master information block (MIB) 600 and a system information block (SIB) 610. For example, the base station 110 may periodically broadcast the MIB 600 and the SIB 610. For example, the MIB 600 may be transmitted through a physical broadcast channel (PBCH). For example, the SIB 610 may include SIB1 and other system information (OSI). For example, the SIB 610 may be transmitted through PDSCH. For example, the OSI may include SIBs (e.g., SIB2 and SIB3) excluding the SIB1.

For example, the terminal 120 may monitor the MIB 600 and the SIB 610, transmitted from the base station 110, in response to an event such as a change in power of the terminal 120 from an off state to an on state. The terminal 120 may obtain cell information to perform access with the base station 110 based on the MIB 600 and SIB 610 that are obtained. The terminal 120 that has obtained the cell information may obtain random access channel information included in the SIB1.

For example, the terminal 120 may transmit a random access preamble (RAP) 620 to the base station 110 based on the SIB1. For example, the random access preamble 620 may be transmitted through a physical random access channel (PRACH). For example, the random access preamble 620 may be referred to as a message 1 (MSG1). The base station 110 may transmit a random access response (RAR) 630, which is a response to the random access preamble 620, to the terminal 120 through the PDSCH. The RAR 630 may be referred to as a message 2 (MSG2). For example, the RAR 630 may include timing advance (TA) information, which is timing information for time synchronization between the terminal 120 and the base station 110. For example, the RAR 630 may include resource information of a physical uplink shared channel (PUSCH) for the terminal 120 to transmit an RRC connection request 640. For example, the resource information may be referred to as UL grant. The RRC connection request 640 may be referred to as an RRC setup request or an RRC setup request message.

For example, the terminal 120 may transmit the RRC connection request 640 to the base station 110 through the PUSCH identified based on the RAR 630. Based on the RRC connection request 640, the base station 110 may transmit an RRC connection setup 650 to the terminal 120. The RRC connection setup 650 may be referred to as an RRC setup or an RRC setup message. The RRC setup message may include the RRC parameter. For example, the RRC parameter may include the RateMatchPatternLTE-CRS. The RRC parameter may be identified for a specific cell. Thereafter, the terminal 120 may feedback acknowledgement (ACK) information on the RRC connection setup 650. For example, the terminal 120 may transmit RRC connection complete 660 to the base station 110. Accordingly, the initial access procedure between the terminal 120 and the base station 110 may be completed. The RRC connection completion 660 may be referred to as RRC setup complete or an RRC setup complete message.

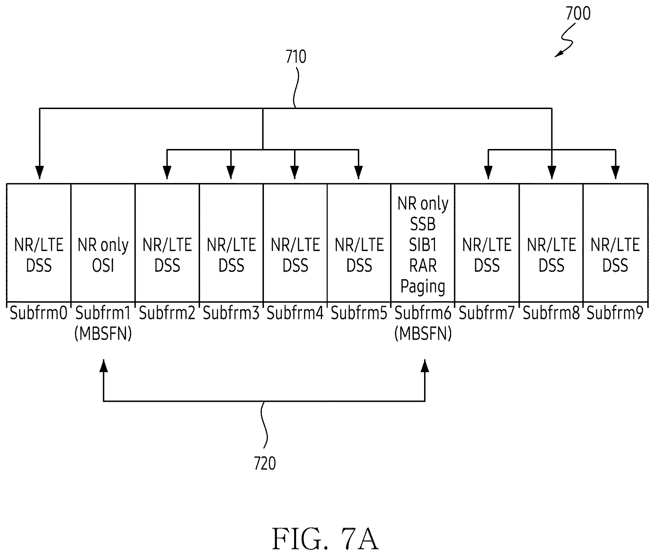

Referring to the above, the terminal 120 may obtain the RateMatchPatternLTE-CRS included in the RRC connection setup 650 after receiving the RRC connection setup 650 during the initial access procedure. The terminal 120 may identify positions of REs to which the CRS is mapped based on the RateMatchPatternLTE-CRS. Based on identifying the positions of REs to which the CRS is mapped, the terminal 120 may perform demodulation remaining REs excluding the REs to which the CRS is mapped among PDSCH resources associated with NR (i.e., REs in a data region). In other words, the base station 110 supporting DSS for the NR and LTE may map the PDSCH associated with the NR in consideration of the REs to which the CRS is mapped in a case of transmitting the PDSCH associated with the NR through a regular subframe. For example, the base station 110 may perform rate matching on the PDSCH that may conflict with the CRS. However, before the RRC connection setup 650 with the base station 110, the terminal 120 may not identify a position of the CRS identified based on the RateMatchPatternLTE-CRS. Therefore, when signals transmitted through the PDSCH while being transmitted from the base station 110 before the RRC connection setup 650 are transmitted to the terminal 120 through the regular subframe, the terminal 120 may not receive the signals. In other words, the signals and the CRS may not overlap in the regular subframe (or RB). Therefore, the signals may be transmitted only through an MBSFN subframe rather than the regular subframe. For example, the signals may include the RAR, the SIB (e.g., SIB1, or OSI), or paging. Hereinafter, FIG. 7A illustrates an example of the MBSFN subframe in which the signals may be transmitted in a radio frame, and the regular subframe.

FIG. 7A illustrates an example of a radio frame for DSS. The DSS may indicate DSS for NR and LTE.

FIG. 7A illustrates an example of a radio frame 700 for the DSS. The radio frame 700 may have a length of 10 ms. The radio frame 700 may include 10 subframes. For example, the radio frame 700 may include two MBSFN subframes 720 and eight regular subframes 710. Each subframe may be set to 1 ms.

For example, in the eight regular subframes 710, an NR communication system or an LTE communication system may dynamically share a frequency band. The frequency band may indicate a frequency band for the DSS. For example, a base station for the NR (e.g., the second node 220 of FIG. 2) and a base station for LTE (e.g., the first node 210 of FIG. 1) may transmit and receive signals through the frequency band in the regular subframes 710.

For example, the two MBSFN subframes 720 may be used as the NR communication system occupies the frequency band. The frequency band may indicate a frequency band for the DSS. For example, the base station for the NR (e.g., the second node 220 of FIG. 2) may transmit and receive signals through the frequency band in the MBSFN subframes 720. The signals transmitted and received in the MBSFN subframes 720 may include signals transmitted through PDSCH before establishing an RRC connection. For example, the signals may include SSB, RAR, SIB, and paging. For example, in the 1st subframe, which is an MBSFN subframe, OSI may be transmitted. For example, in the 6th subframe, which is another MBSFN subframe, the SSB, SIB1, the RAR, and paging may be transmitted.

In FIG. 7A, the radio frame 700 including the two MBSFN subframes 720 is illustrated as an example, but an embodiment of the present disclosure is not limited thereto. For example, the radio frame 700 may include only one MBSFN subframe. For example, the radio frame 700 may include only the 6th subframe as an MBSFN subframe. In this case, the SSB, the RAR, the SIB, and the paging may be transmitted in the 6th subframe.

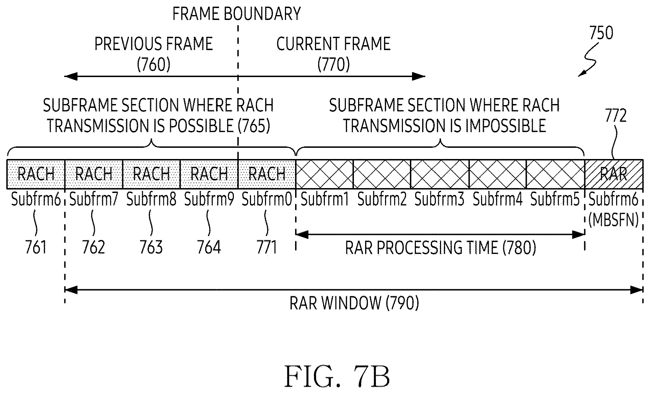

Referring to FIGS. 5A to 7A, in the DSS system for the NR and the LTE, the terminal 120 may obtain information on a CRS pattern after completing an RRC access procedure (or receiving the RRC connection setup 650). Therefore, signals (e.g., the SIB, the RAR, and the paging) transmitted through the PDSCH before establishing the RRC connection should be allocated in an MBSFN subframe that does not have a risk of colliding with CRS. The SIB1, the paging, or the OSI from among the signals may be periodically transmitted from the base station to the terminal. Therefore, even if the SIB1, the paging, or the OSI is transmitted through the periodically set MBSFN subframe in radio frames, a degree of deterioration of NR communication system performance for the SIB1, the paging, or the OSI may be relatively small. However, in a case that a transmission timing of the RAR is limited to the MBSFN subframe, the degree of deterioration of the NR system performance may be relatively large. In a case that the transmission timing of the RAR is limited to the MBSFN subframe, details of the deterioration of the NR communication system performance that occurs are described in FIG. 7B below.

FIG. 7B illustrates an example of a section in which random access channel (RACH) transmission is possible in a radio frame for DSS. The DSS may indicate DSS for NR and LTE. For example, a time section 750 of FIG. 7B may indicate an example of two consecutive radio frames (e.g., the radio frame 700 of FIG. 7A). For example, the RACH may indicate the random access preamble 620 of FIG. 6.

In FIG. 7B, the time section 750 may include two radio frames 760 and 770. For example, the radio frame 760 may indicate a frame transmitted in a previous time section (hereinafter referred to as a previous frame), and the radio frame 770 may indicate a frame transmitted in a current time section (hereinafter referred to as a current frame).

For example, in a case that a terminal (e.g., the terminal 120 of FIG. 1) transmits a random access preamble to a base station (e.g., the base station 110 of FIG. 1), the base station 110 should transmit RAR in response to the random access preamble in an RAR window 790. For example, the RAR window 790 may be set to a maximum of 10 ms (i.e., a length corresponding to one radio frame). In this case, a minimum processing time may be required for the base station 110 to transmit the RAR in response to the random access preamble. The minimum processing time may be referred to as RAR processing time 780. For example, the RAR processing time 780 may take about 5 ms.

In an example of FIG. 7B, it is assumed that the base station 110 transmits the RAR in an MBSFN subframe 772 to avoid overlapping with CRS. The MBSFN subframe 772 may be the 6th subframe of the current radio frame 770. Even if the terminal 120 transmits a random access preamble in the 1st subframe to the 5th subframe of the radio frame 770, the base station 110 cannot transmit the RAR for the random access preamble in the MBSFN subframe 772 according to the RAR processing time 780. Furthermore, even if the terminal 120 transmits the random access preamble in the 6th subframe 761 of the previous radio frame 760 or a previous subframe (not illustrated), the terminal 120 cannot receive the RAR transmitted from the MBSFN subframe 772 due to limitation of the RAR window 790. Therefore, the terminal 120 may transmit the random access preamble only in the 7th subframe 762, the 8th subframe 763, the 9th subframe 764 of the radio frame 760, and the 0th subframe 771 of the radio frame 770. In other words, a subframe section 765 where RACH transmission is possible may include the 7th subframe 762, the 8th subframe 763, the 9th subframe 764, and the 0th subframe 771. As described above, there may be limitations on a time section in which the terminal 120 may transmit the random access preamble.

Also, there may be limitations on a format of the random access preamble. For example, in a scenario where a preamble format 0 is allocated to each radio frame, a standard defines that physical random access channel (PRACH) configuration indexes 16 to 27 are used as PRACH resources, as illustrated in the table below.

[Table 1]

| PRACH Configuration Index | Preamble Format | Frame Cycle | PRACH Allocation Subframe |
|---|---|---|---|
| 16 | 0 | each frame | 1 |
| 17 | 0 | each frame | 4 |

(continued)

| PRACH Configuration Index | Preamble Format | Frame Cycle | PRACH Allocation Subframe |
|---|---|---|---|
| 18 | 0 | each frame | 7 |
| 19 | 0 | each frame | 1,6 |
| 20 | 0 | each frame | 2,7 |
| 21 | 0 | each frame | 3,8 |
| 22 | 0 | each frame | 1,4,7 |
| 23 | 0 | each frame | 2,5,8 |
| 24 | 0 | each frame | 3,6,9 |
| 25 | 0 | each frame | 0,2,4,6,8 |
| 26 | 0 | each frame | 1,3,5,7,9 |
| 27 | 0 | each frame | 0,1,2,3,4,5,6,7,8,9 |

Referring to the above-described table and FIG. 7B, in the DSS, only the PRACH configuration index 18 (the 7th subframe) may be operated according to RACH resource allocation restrictions. In other words, in the DSS, the terminal 120 may transmit a random access preamble based on the PRACH configuration index 18 only in the 7th subframe.

In a case that there are a plurality of terminals including the terminals 120 within a cell for the DSS, the base station 110 should accommodate the terminals by distributing them into different subframes in the radio frame using the PRACH configuration indexes 16 to 27. In addition, the base station 110 should allocate RACH resources by varying subframes for each cell to avoid cell-to-cell interference. For example, in a case that three cells act as interference with each other, the base station may minimize the cell-to-cell interference by allocating the PRACH configuration index 16 to a cell A, the PRACH configuration index 17 to a cell B, and the PRACH configuration index 18 to a cell C.

However, as illustrated in the above-described table and FIG. 7B, in a case of the DSS system that transmits the RAR by limiting it to the MBSFN subframe, there are regulations on RACH resource allocation, system capacity may be reduced, and system performance may deteriorate. In order to solve the above-described problem, two MBSFN subframes may be configured within one radio frame as illustrated in FIG. 7B. This may cause a problem that available resources are reduced in terms of the LTE communication system.

Hereinafter, in the present disclosure, a method and a device for transmitting the RAR for the NR in the regular subframe rather than the MBSFN subframe are proposed in order to solve the regulations of the RACH resource allocation caused by transmitting the RAR for the NR in the DSS system only within the MBSFN subframe. The RAR for the NR may indicate RAR corresponding to a random access preamble transmitted by a terminal associated with the NR. Hereinafter, it is described based on the RAR for convenience of explanation, but an embodiment of the present disclosure is not limited thereto. For example, the embodiment of the present disclosure may be also applied to signals (e.g., SIB1, OSI, and paging) transmitted through the PDSCH before establishing the RRC connection, not through the RAR.

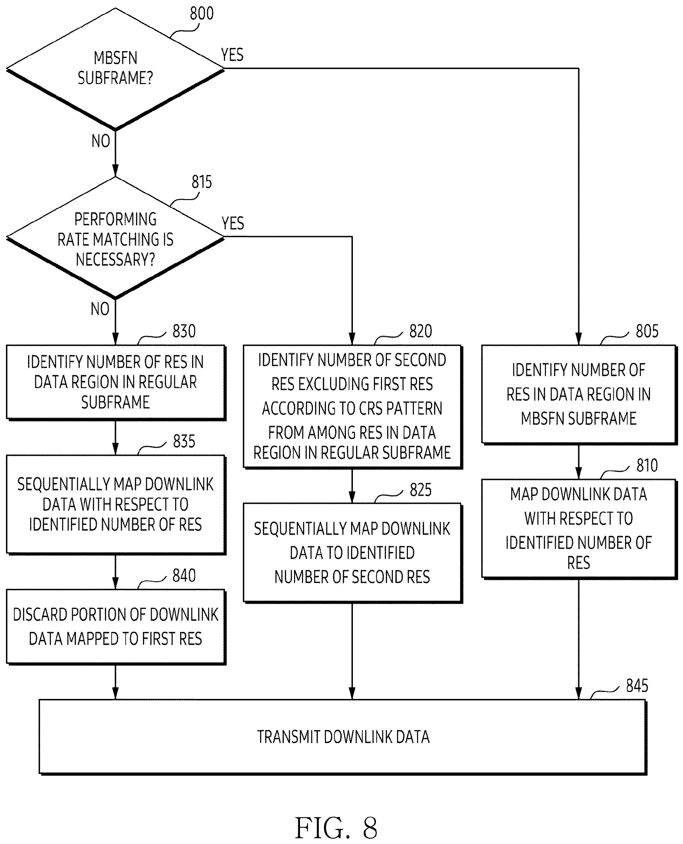

FIG. 8 illustrates an example of an operation flow of a method for transmitting downlink data in DSS.

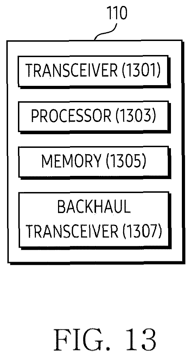

The DSS of FIG. 8 may indicate DSS for NR and LTE. The downlink data may indicate data transmitted through PDSCH associated with the NR. The operation flow of FIG. 8 may be performed by the base station 110 of FIG. 1. For example, the base station 110 may include a scheduler of a medium access control (MAC) layer of the base station 110. The base station 110 may be a base station supporting the DSS. For example, at least one of operations of FIG. 8 may be performed by a processor (e.g., the processor 1303 of FIG. 13) of the base station 110. For example, the processor may perform at least one of the operations of FIG. 8 based on the scheduler.

Referring to FIG. 8, in operation 800, the base station 110 may identify whether a subframe to which the downlink data is transmitted is an MBSFN subframe. For example, the base station 110 may identify whether a resource region to which the downlink data is to be allocated is REs in the MBSFN subframe. In operation 800, the base station 110 may perform operation 805 in a case that the subframe to which the downlink data is to be transmitted is identified as the MBSFN subframe. Alternatively, in a case that the base station 110 identifies the subframe to which the downlink data is to be transmitted as a regular subframe rather than the MBSFN subframe, the base station 110 may perform operation 815.

In operation 805, the base station 110 may identify the number of REs in a data region in the MBSFN subframe. For example, the base station 110 may identify the data region of the MBSFN subframe to which the downlink data is to be allocated. For example, the data region may indicate a resource region different from a control region to which control information in the MBSFN subframe is transmitted. For example, the data region may indicate the MBSFN region 404 of FIG. 4. For example, the base station 110 may identify the number of REs in the data region. The REs in the data region may include an entire REs included in the data region.

In operation 810, the base station 110 may map the downlink data with respect to the identified number of REs. For example, the base station 110 may map the downlink data with respect to the entire REs in the data region. This may be because the MBSFN subframe is a subframe occupied only by an NR communication system.

In operation 815, the base station 110 may identify whether it is necessary to perform rate matching on the downlink data. For example, in a case that the subframe to which the downlink data is to be allocated is the regular subframe, the base station 110 may identify whether the rate matching is necessary for the downlink data.

Whether it is necessary to perform the rate matching may be identified based on a signal included in the downlink data. For example, the base station 110 may identify whether the rate matching is performed based on an RRC connection state of a terminal (e.g., the terminal 120 of FIG. 1) associated with the NR.

For example, in a case that the signal included in the downlink data is a signal for an RRC connection transmitted through PDSCH, to the terminal associated with the NR, which is in a state before establishing the RRC connection (e.g., an RRC idle state), the base station 110 may identify that performing the rate matching is not necessary. For example, the signal for the RRC connection may include SIB (e.g., SIB1, or OSI), RAR, or paging. In response to identifying that performing the rate matching is not necessary, the base station 110 may deactivate an indicator indicating performing the rate matching with respect to the downlink data. For example, the base station 110 may deactivate the indicator in a case that the downlink data includes a signal for the terminal in the RRC idle state (RRC_idle).

Alternatively, in a case that a signal included in the downlink data is not a signal for the RRC connection, the base station 110 may identify that performing the rate matching is necessary. For example, in response to identifying that performing the rate matching is necessary, the base station 110 may activate the indicator indicating the rate matching with respect to the downlink data. For example, the base station 110 may activate the indicator in a case that the downlink data does not include the signal for the terminal in the RRC idle state (RRC_idle) or includes a signal only for a terminal in an RRC connected state (RRC_connected).

In operation 815, the base station 110 may perform operation 820 in a case of identifying that performing the rate matching is necessary. Alternatively, the base station 110 may perform operation 830 in a case of identifying that performing the rate matching is not necessary.

In operation 820, the base station 110 may identify the number of second REs excluding first REs according to a CRS pattern from among the REs in the data region of the regular subframe. For example, the base station 110 may identify the first REs according to the CRS pattern among the REs in the data region of the regular subframe. For example, the first REs may indicate a portion of the REs in the data region to which CRS is mapped according to the CRS pattern. For example, the base station 110 may identify the CRS pattern based on RateMatchPatternLTE-CRS, which is an RRC parameter. Accordingly, the base station 110 may identify the first REs in the data region to which the CRS is to be mapped. The base station 110 may identify the number of the second REs excluding the first REs from among the entire REs included in the data region.

In operation 825, the base station 110 may sequentially map the downlink data to the identified number of second REs.

For example, the base station 110 may identify the number of the second REs $N_{RE}$ based on activation of the indicator indicating whether to perform the rate matching. For example, an RE count identifier of the base station 110 may identify the number of the second REs $N_{RE}$. For example, the RE count identifier may transmit the number of the identified second REs $N_{RE}$ to a coding bit count identifier. For example, the coding bit count identifier of the base station 110 may identify a coding bit count G based on a modulation method applied to the downlink data. Equation for the number of REs and coding bit count identified based on the modulation method is as follows.

【Equation 1】

$$G = N_{RE} \times Q_m$$

The G may indicate the coding bit count, the $N_{RE}$ may indicate the number of identified REs (e.g., the second REs), and the $Q_m$ may indicate the number of bits mapped to a modulation symbol. For example, the modulation symbol may include a quadrature amplitude modulation (QAM) symbol.

For example, an LDPC channel encoder of the base station 110 may generate a code bit string corresponding to the coding bit count by performing channel coding on a transport block for the downlink data. For example, a length of the code bit string may have a length of G. For example, a modulator of the base station 110 may perform modulation symbol mapping on the code bit string. For example, the modulator may generate modulation symbols having a length of M based on the code bit string having a length of G. For example, the modulator may generate a set (e.g., the set 560 of FIG. 5B) of a modulated PDSCH symbol having a length of the M for the downlink data. A relationship between the length G of the code bit string and the length M of the set of the modulated PDSCH symbol is as illustrated in Equation below.

【Equation 2】

$$M = \frac{G}{Q_m}$$

Referring to the above-described equations, the number of REs $N_{RE}$, which is an identification target, may be the same as the length M of the set of the modulated PDSCH. In other words, one modulation symbol may be mapped to one RE.

For example, a resource mapper of the base station 110 may sequentially map the downlink data to the second REs. For example, the resource mapper may map PDSCH symbols modulated for the downlink data to the second REs positioned around the first REs. In other words, the resource mapper may map the modulated PDSCH symbols to the second REs while avoiding the first REs. In connection with the above example, a method of mapping the set 560 of FIG. 5B to the subframe 505 may be referenced. Referring to FIG. 5B, each of the modulated PDSCH symbols may be mapped to RE excluding REs to which CRS is mapped without a discarded symbol.

The RE count identifier, the coding bit count identifier, the LDPC channel encoder, the modulator, and the resource mapper included in the base station 110 may be included in the processor of the base station 110. For example, the RE count identifier, the coding bit count identifier, the LDPC channel encoder, the modulator, and the resource mapper included in the base station 110 may be configured in hardware and/or software in the processor of the base station 110.

In operation 830, the base station 110 may identify the number of REs in the data region of the regular subframe. For example, the number of REs may indicate the number of the entire REs in the data region. For example, the entire REs may include the first REs according to the CRS pattern and the second REs excluding the first REs. In this case, the base station 110 may identify the number of the entire REs including the first REs according to the CRS pattern, unlike operation 820.

In operation 835, the base station 110 may sequentially map the downlink data with respect to the identified number of the REs (i.e., the entire REs).

For example, the base station 110 may identify the number of REs $N_{RE}$ based on deactivation of the indicator indicating whether to perform the rate matching. For example, the RE count identifier of the base station 110 may identify the number of the REs $N_{RE}$.

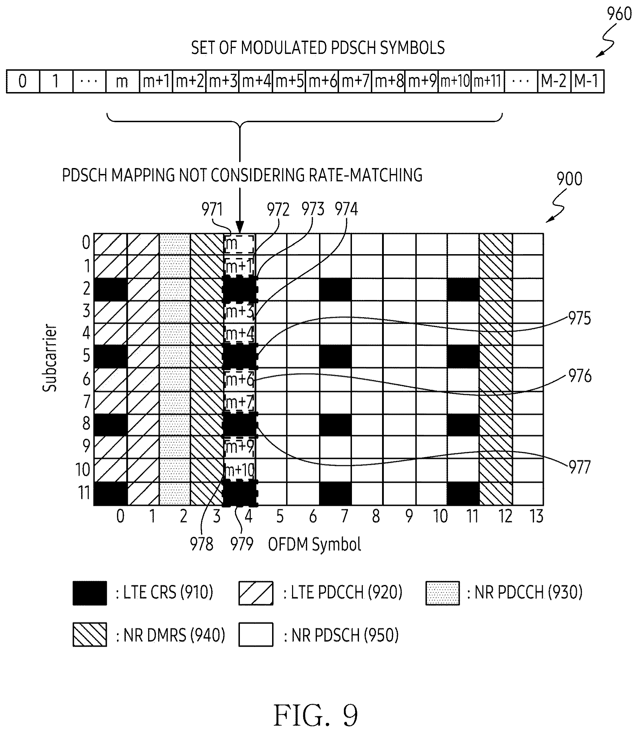

For example, the resource mapper of the base station 110 may sequentially map the downlink data for the REs. For example, the resource mapper may map the PDSCH symbols modulated for the downlink data to the REs including the first REs. In other words, the resource mapper may assume that the first REs do not exist, and map the modulated PDSCH symbols to the REs. A mapping method associated with the above example will be described in detail in FIG. 9.

In operation 840, the base station 110 may discard a portion of the downlink data mapped to the first REs. For example, the base station 110 may identify the portion of the downlink data mapped to the first REs. The base station 110 may discard the identified portion. This is because the first REs are portions to which the CRS is to be mapped, and the CRS is a signal defined in an LTE communication system, and should be transmitted regardless of the downlink data associated with the NR.

Referring to the above, through operation 820 to operation 825, the base station 110 may map the downlink data to resources by performing the rate matching on the downlink data. Alternatively, through operation 830 to operation 840, the base station 110 may map the downlink data to resources without performing the rate matching on the downlink data.

In operation 845, the base station 110 may transmit the downlink data. For example, the base station 110 may transmit the downlink data mapped to the REs in the MBSFN subframe through operation 810. Alternatively, the base station 110 may transmit the downlink data sequentially mapped to the second REs excluding the first REs to which the CRS is mapped from among the REs in the data region in the regular subframe through operation 825. Alternatively, the base station 110 may transmit the downlink data sequentially mapped to the REs in the data region in the regular subframe through operation 835. The downlink data mapped through operation 835 may indicate downlink data partially discarded according to operation 840.

An example of a method of mapping the downlink data (e.g., the PDSCH including the RAR) regardless of the resources (e.g., the first REs) to which the CRS is to be mapped according to operations 830 to 840 will be described in FIG. 9.

FIG. 9 illustrates an example of a method of mapping downlink data in a case that rate matching is not performed in a regular subframe in DSS.

The DSS may indicate DSS for NR and LTE. The regular subframe may indicate a subframe other than at least one subframe for MBSFN from among a plurality of subframes included in a radio frame. For example, one radio frame may include 10 subframes. The regular subframe may be referred to as a non-MBSFN subframe.

Referring to FIG. 9, an example in which an NR physical channel and an LTE physical channel are allocated in a regular subframe 900 of a DSS system for the NR and the LTE is illustrated. Referring to FIG. 9, the regular subframe 900 may include a control region and a data region.

For example, the control region may be mapped to CRS 910 associated with the LTE, PDCCH 920 associated with the LTE, and PDCCH 930 associated with the NR. For example, the control region may include REs of three OFDM symbol (hereinafter, symbol) sections corresponding to the 0th to the 2nd. For example, the CRS 910 may be mapped to the 2nd, the 5th, the 8th, and the 11th REs in the 0th OFDM symbol section from among the control region. In addition, the PDCCH 920 may be mapped to remaining REs excluding REs to which the CRS 910 is mapped from among the REs corresponding to the 0th to the 1st symbols in the control region. Also, the PDCCH 930 may be mapped to REs corresponding to the 2nd symbol from among the control region.

For example, the data region may include the CRS 910, a demodulation reference signal (DMRS) 940 associated with the NR, and PDSCH 950 associated with the NR. For example, the data region may include REs of 11 symbol sections corresponding to the 3rd to the 13th. For example, the DMRS 940 may be mapped to REs corresponding to the 3rd and the 12th symbols in the data region. For example, the CRS 910 may be mapped to the 2nd, the 5th, the 8th, and the 11th REs in the 4th symbol section from among the data region. For example, the CRS 910 may be mapped to the 2nd, the 5th, the 8th, and the 11th REs in the 7th symbol section from among the data region. For example, the CRS 910 may be mapped to the 2nd, the 5th, the 8th, and the 11th REs in the 11th symbol section from among the data region. In addition, the PDSCH 950 may be mapped to remaining REs to which the CRS 910 and the DMRS 940 are not mapped from among the data region.

Referring to FIG. 9, a set 960 of modulated PSDCH symbols may be sequentially mapped to REs in the data region. For example, the set 960 may be sequentially mapped to the REs without considering first REs to which the CRS 910 is mapped. For example, the mth to the m+11th PDSCH symbols from among the set 960 may be sequentially mapped to REs in the 4th symbol section. The mth PDSCH symbol may indicate a modulation symbol having an index of m. For example, the CRS 910 may be mapped to RE 973, RE 975, RE 977, and RE 979 from among the REs in the 4th symbol section. For example, the mth PDSCH symbol may be mapped to RE 971. Furthermore, with respect to RE 972 continuous with the RE 971, the m+1 PDSCH symbol may be sequentially mapped. For example, the m+2th PDSCH symbol may be mapped to the RE 973 to which the CRS 910 is to be mapped. For example, the m+3th and the m+4th PDSCH symbols may be sequentially mapped to REs 974 between the RE 973 and the RE 975, to which CRS 910 is to be mapped. For example, the m+5th PDSCH symbol may be mapped to the RE 975 to which the CRS 910 is to be mapped. For example, the m+6th and the m+7th PDSCH symbols may be sequentially mapped to REs 976 between the RE 975 and the RE 977, to which the CRS 910 is to be mapped. For example, the m+8th PDSCH symbol may be mapped to the RE 977 to which the CRS 910 is to be mapped. For example, the m+9th and the m+10th PDSCH symbols may be sequentially mapped to REs 978 between the RE 977 and the RE 979, to which the CRS 910 is mapped. For example, the m+11th PDSCH symbol may be mapped to the RE 979 to which the CRS 910 is to be mapped.

Referring to the above, the downlink data (e.g., the set 960) may be sequentially mapped to an entire REs in the data region without considering rate matching. Since the rate matching is not considered, a portion of the downlink data may be discarded for the REs 973, 975, 977, and 979 to which the CRS 910 is to be mapped. For example, the m+2th, the m+5th, the m+8th, and the m+11th PDSCH symbols overlap the REs 973, 975, 977, and 979 occupied by the CRS 910, and thus may be discarded.

In the mapping method without considering the rate matching of FIG. 9, compared to the mapping method considering the rate matching of FIG. 5B, downlink data in which a portion of the set 960 is lost may be transmitted through the regular subframe 900. In other words, a device and a method according to an embodiment of the present disclosure may transmit, in a case of PDSCH including RAR, the PDSCH including the RAR through the general subframe 900 by performing mapping without considering the rate matching. In terms of a terminal (e.g., the terminal 120 of FIG. 1) that receives the downlink data in which the portion is lost, reception performance may be slightly reduced. However, even if the portion of the downlink data is lost, the terminal 120 may completely restore downlink data in which the portion is not lost by using robust channel coding. In addition, a base station (e.g., the base station 110 of FIG. 1) may improve reception performance even when transmitting the downlink data in which the portion is lost by lowering an LDPC coding rate.

FIG. 9 illustrates a sequential mapping operation without considering the rate matching for the REs in the 4th symbol section, but the embodiment of the present disclosure is not limited thereto. For example, the mapping operation for the REs may be equally applied to all OFDM symbols and all RBs, to which the PDSCH is allocated.

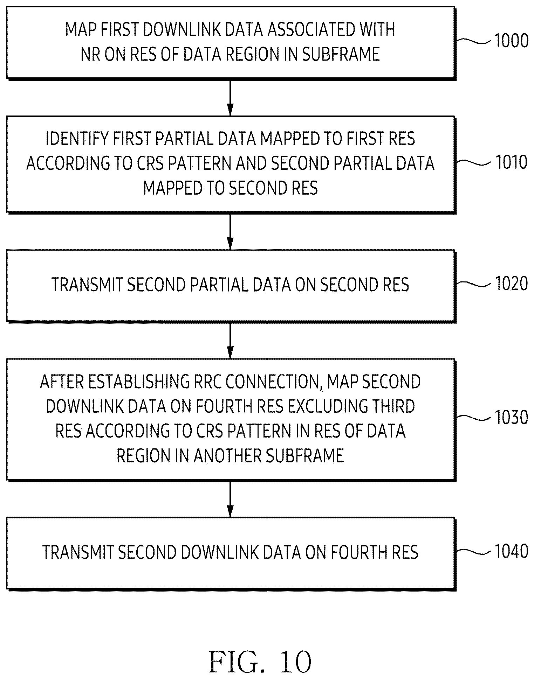

FIG. 10 illustrates an example of an operation flow for a method of transmitting downlink data according to an RRC connection state in DSS.

The DSS of FIG. 10 may indicate DSS for NR and LTE. The downlink data may indicate data transmitted through PDSCH associated with the NR. The operation flow of FIG. 10 may be performed by the base station 110 of FIG. 1. For example, the base station 110 may include a scheduler of a medium access control (MAC) layer of the base station 110. The base station 110 may be a base station supporting the DSS. For example, at least one of operations of FIG. 10 may be performed by a processor (e.g., a processor 1303 of FIG. 13) of the base station 110. For example, the processor may perform the at least one of the operations of FIG. 10 based on the scheduler.

Referring to FIG. 10, in operation 1000, the base station 110 may map first downlink data associated with the NR on REs of a data region in a subframe. For example, the base station 110 may identify whether the subframe is an MBSFN subframe. For example, in a case that the subframe is a regular subframe rather than the MBSFN subframe, the base station 110 may identify whether the first downlink data includes RAR, paging, or a system information block (SIB). The RAR, the paging, or the SIB may be referred to as a signal transmitted through PDSCH before establishing an RRC connection. For example, in a case that the first downlink data includes the RAR, the paging, or the SIB, the base station 110 may deactivate an indicator indicating performing rate matching with respect to the first downlink data. The base station 110 may map the first downlink data on an entire REs of the data region in the regular subframe based on the deactivated indicator.

In operation 1010, the base station 110 may identify first partial data mapped to first REs according to a CRS pattern and second partial data mapped to second REs. For example, the base station 110 may identify the CRS pattern based on RateMatchPatternL TE-CRS, which is an RRC parameter. For example, the base station 110 may identify the first partial data, which is a portion of the first downlink data mapped to the first REs according to the CRS pattern. In addition, the base station 110 may identify the second partial data, which is a portion of the first downlink data mapped to the second REs excluding the first REs from among the entire REs. The first REs and the second REs may be included in the entire REs in the data region.

In operation 1020, the base station 110 may transmit the second partial data on the second REs. For example, the base station 110 may transmit the second partial data, which is a portion of the first downlink data, on the second REs. In addition, CRS according to the CRS pattern may be transmitted on the first REs. Accordingly, the base station 110 may discard the first partial data, which is a portion of the first downlink data. In other words, in operation 1000, the base station 110 may map the first downlink data to the entire REs in the data region without considering rate matching. Thereafter, the portion of the first downlink data (i.e., the first partial data) mapped to the first REs according to the CRS pattern may be discarded.

The second partial data transmitted through operation 1020 may be transmitted to a terminal (e.g., the terminal 120 of FIG. 1) associated with the NR performing the RRC connection with the base station 110. In other words, the terminal 120 may still be in a state before establishing the RRC connection. For example, the state before establishing the RRC connection may include an RRC idle state.

For example, the terminal 120 may perform an RRC connection procedure based on the obtained RAR based on the second partial data. For example, the terminal 120 may transmit an RRC connection request (or RRC setup request) message to the base station 110. The base station 110 may transmit an RRC connection setup (or RRC setup) message to the terminal in response to the RRC connection request message. Accordingly, the terminal 120 may identify the CRS pattern based on the RateMatchPatternL TE-CRS included in the RRC connection setting message. In response to the RRC connection setting message, the terminal 120 may transition from the RRC idle state to an RRC connection state by transmitting an RRC connection completion (or RRC setup completion) message to the base station 110. For example, the base station 110 may activate the deactivated indicator after establishing the RRC connection with the terminal 120.

In operation 1030, after establishing the RRC connection, the base station 110 may map the second downlink data on fourth REs excluding third REs according to a CRS pattern in REs of a data region in another subframe. For example, the base station 110 may identify the third REs according to the CRS pattern from among the REs in the data region in the other subframe. For example, the base station 110 may identify the third REs to which CRS is mapped and to be transmitted. The base station 110 may identify the fourth REs excluding the third REs from among the REs in the data region of the other subframe. The base station 110 may map the second downlink data on the fourth REs based on the activated indicator. For example, the second downlink data may include the PDSCH associated with the NR. The other subframe may be a regular subframe rather than the MBSFN subframe. In operation 1040, the base station 110 may transmit the second downlink data on the fourth REs.

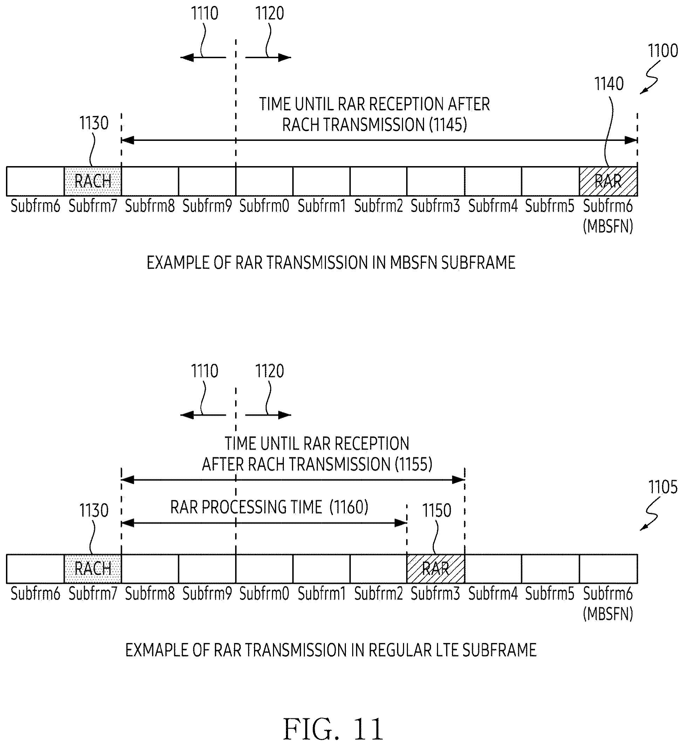

FIG. 11 illustrates an example in which a transmission timing of RAR is changed in a radio frame for DSS. The DSS may indicate DSS for NR and LTE. For example, a time section 1100 and a time section 1105 of FIG. 11 may indicate an example of two consecutive radio frames (e.g., the radio frame 700 of FIG. 7A). For example, the RAR may indicate a message transmitted by a base station (e.g., the base station 110 of FIG. 1) to a terminal (e.g., the terminal 120 of FIG. 1) in response to a random access preamble (RACH of FIG. 11).

Referring to FIG. 11, the time section 1100 and the time section 1105 may include two radio frames 1110 and 1120. For example, the radio frame 1110 may indicate a frame transmitted in a previous time section (hereinafter referred to as a previous frame), and the radio frame 1120 may indicate a frame transmitted in a current time section (hereinafter referred to as a current frame).

For example, in a case that the terminal 120 transmits a random access preamble to the base station 110 on the 7th subframe 1130 of the previous radio frame 110, the base station 110 should transmit RAR in response to the random access preamble. An example of the time section 1100 illustrates an example of RAR transmitted on an MBSFN subframe in a DSS system. For example, the random access preamble associated with the RAR may be transmitted based on a PRACH configuration index 18. An example of the time section 1105 illustrates an example of RAR transmitted on a regular subframe in the DSS system according to an embodiment of the present disclosure.

Referring to the time section 1100, the base station 110 may transmit the RAR to the terminal 120 through a subframe determined based on an RAR window and RAR processing time for the RAR. The subframe may be an MBSFN subframe to avoid overlapping of the RAR and CRS. In an example of the time section 1100, the base station 110 may transmit the RAR to the terminal 120 through the 6th subframe 1140, which is an MBSFN subframe of the current radio frame 1120. Referring to the time section 1100, the terminal 120 may receive the RAR in the subframe 1140 after a time 1145 of 9 ms length from the subframe 1130 that has transmitted the random access preamble.

Alternatively, referring to the time section 1105, the base station 110 may transmit the RAR to the terminal 120 through the subframe determined based on the RAR window and the RAR processing time for the RAR. The subframe may be a regular subframe. In an example of the time section 1105, the base station 110 may transmit the RAR to the terminal 120 through the 3rd subframe 1150, which is a regular subframe of the current radio frame 1120. Referring to the time section 1105, the base station 110 may transmit the RAR to the terminal 120 after RAR processing time 1160 (about 5 ms) from the subframe 1130 in which the random access preamble is transmitted from the terminal 120. The terminal 120 may receive the RAR in the subframe 1140 after a time 1155 of 6 ms length from the subframe 1130.

Referring to the above, the base station 110 may not transmit the RAR to a fixed subframe (e.g., the MBSFN subframe), but may transmit the RAR as soon as the RAR is generated. Accordingly, time required for the terminal 120 to establish an RRC connection with the base station 110 may be reduced.

In addition, as described above, in order to transmit the RAR on the MBSFN subframe, the random access preamble associated with the RAR may be transmitted using a limited RACH resource. For example, according to the PRACH configuration index 18, the random access preamble may only be transmitted in a specific subframe (e.g., the 7th subframe). Therefore, transmitting the RAR only through the MBSFN subframe in the DSS system may inefficiently use the RACH resource and limit the number of terminals that may be accommodated in the same cell. In addition, since terminals should use the same RACH resource even within adjacent cells, cell-to-cell interference may occur and system performance may deteriorate.

A device and a method according to an embodiment of the present disclosure may transmit PDSCH (i.e., downlink data) including RAR in a regular subframe based on a mapping method that does not consider rate matching. Accordingly, the device and the method according to an embodiment of the present disclosure may solve a problem of limiting a system capacity and may improve the deterioration of the system performance due to the inter-cell interference. For example, the device and the method according to an embodiment of the present disclosure may use not only the PRACH configuration index 18, but also an entire PRACH configurations. Accordingly, since a plurality of RACH resources may be allocated even within the same radio frame, the base station 110 may accommodate more terminals in the same or adjacent cell. In addition, for example, in the DSS system that transmits the RAR to the MBSFN subframe, interference between adjacent cells may occur by using only the 7th subframe. Accordingly, the deterioration of the system performance may be likely to occur. The device and the method according to an embodiment of the present disclosure may reduce the cell-to-cell interference by allocating RACH resources using different subframes in adjacent cells.

Referring to the above, the present disclosure describes the RAR from among signals transmitted through the PDSCH before establishing the RRC connection as an example, but the embodiment of the present disclosure is not limited thereto. For example, the embodiment of the present disclosure may be applied to all signals transmitted through the PDSCH in the base station before establishing the RRC connection between the terminal and the base station is completed. For example, the signals may include a system information block (SIB) (e.g., SIB1, or OSI), and paging. The device and the method according to an embodiment of the present disclosure may allocate the signals on the regular subframe rather than the MBSFN subframe, thereby increasing a degree of freedom in resource allocation.

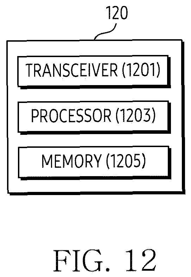

FIG. 12 illustrates an example of a functional configuration of a terminal.

FIG. 12 illustrates the functional configuration of the terminal (e.g., the terminal 120 of FIG. 1). In receiving a downlink signal from a base station (e.g., the base station 110 of FIG. 1) or a sidelink signal from another terminal, the terminal 120 may operate as a receiving end.

Referring to FIG. 12, the terminal 120 may include at least one processor 1203, at least one memory 1205, and at least one transceiver 1201. Hereinafter, a component is described in a singular, but implementation of a plurality of components or sub-components is not excluded.

The transceiver 1201 performs functions for transmitting and receiving signals through a wireless channel. For example, the transceiver 1201 performs a conversion function between a baseband signal and a bit stream according to a physical layer standard of a system. For example, when transmitting data, the transceiver 1201 generates complex symbols by encoding and modulating a transmission bit string. In addition, when receiving data, the transceiver 1201 restores a reception bit stream by demodulating and decoding a baseband signal. In addition, the transceiver 1201 up-converts a baseband signal into a radio frequency (RF) band signal and then transmits it through an antenna, and down-converts the RF band signal received through the antenna into a baseband signal.

To this end, the transceiver 1201 may include a transmission filter, a reception filter, an amplifier, a mixer, an oscillator, a digital to analog converter (DAC), an analog to digital converter (ADC), and the like. The transceiver 1201 may include a plurality of transmission/reception paths. Furthermore, the transceiver 1201 may include an antenna unit. The transceiver 1201 may include at least one antenna array configured with a plurality of antenna elements. In terms of hardware, the transceiver 1201 may be configured with a digital circuit and an analog circuit (e.g., a radio frequency integrated circuit (RFIC). Herein, the digital circuit and the analog circuit may be implemented as one package. Also, the transceiver 1201 may include a plurality of RF chains. The transceiver 1201 may perform beamforming. The transceiver 1201 may apply a beamforming weight to a signal to be transmitted/received in order to give a directionality according to a setting of the processor 1203. According to an embodiment, the transceiver 1201 may include a radio frequency (RF) block (or an RF unit).

The transceiver 1201 transmits and receives signals as described above. Accordingly, the transceiver 1201 may be referred to as a 'transmission unit', a 'reception unit', or a 'transmission/reception unit'. According to an embodiment, the transceiver 1201 may provide an interface for performing communication with other nodes in a network. In other words, the transceiver 1201 may convert a bit stream transmitted from the terminal 120 to another node, for example, another access node, another base station, an upper node, a core network, and the like, into a physical signal, and convert the physical signal received from the other node into the bit string.

The processor 1203 controls overall operations of the terminal 120. For example, the processor 1203 writes and reads data to and from the memory 1205. For example, the processor 1203 transmits and receives signals through the transceiver 1201. According to an embodiment, the processor 1203 may obtain an MMSE weight of a receiver included in the terminal 120 based on an estimated channel using reception reference signals, an estimated noise and interference, and an additional diagonal load identified according to a receiver resolution. FIG. 12 illustrates one processor, but embodiments of the present disclosure are not limited thereto. The terminal 120 may include at least one processor to perform the embodiments of the present disclosure. The processor 1203 may be referred to as a control unit or control means. According to embodiments, the processor 1203 may control the terminal 120 to perform at least one of operations or methods according to the embodiments of the present disclosure. For example, the processor 1203 may be operably (or operatively) coupled with the transceiver 1201, the memory 1205, or a backhaul transceiver 1207. For example, the processor 1203 being operably coupled with the transceiver 1201 may indicate that the processor 1201 is connected with the transceiver 1201 through another component of the terminal 120. Alternatively, the processor 1203 being operably coupled with the transceiver 1201 may indicate that the transceiver 1201 is controlled by the processor 1203.

The processor 1203 may include various processing circuits and/or a plurality of processors. For example, a term "processor" used in the present document, including the scope of claims, may include various processing circuits including at least one processor, and one or more of the at least one processor may be configured to perform various functions described below individually and/or collectively in a distributed manner. As used below, in a case that "processor", "at least one processor", and "one or more processors" are described as configured to perform various functions, these terms, for example, are not limited to situations in which one processor performs a portion of cited functions, and situations in which another processor(s) performs another portion of the cited functions, and also one processor may perform all of the cited functions. Additionally, the at least one processor may include a combination of processors that perform various functions listed/disclosed, for example, in the distributed manner. The at least one processor may execute program instructions to achieve or perform various functions.

The memory 1205 may store data such as a basic program, an application program, and setting information for an operation of the terminal 120. The memory 1205 may store various data used by at least one component (e.g., the transceiver 1201 and the processor 1203). The data may include, for example, input data or output data for software and related commands. The memory 1205 may be configured with volatile memory, non-volatile memory, or a combination of the volatile memory and the non-volatile memory. And the memory 1205 may provide the stored data according to a request of the processor 1203.

FIG. 13 illustrates an example of a functional configuration of a base station.

FIG. 13 illustrates the functional configuration of the base station (e.g., the base station 110 of FIG. 1). In receiving an uplink signal of a terminal (e.g., the terminal 120), the base station 110 or RU of the base station 110 may operate as a receiving end. Hereinafter, it is described based on the base station 110, but a portion of descriptions of the base station 110 may also be applied to the RU of the base station 110.

Referring to FIG. 13, the base station 110 may include a transceiver 1301, a processor 1303, memory 1305, and a backhaul transceiver 1307.

The transceiver 1301 may perform functions for transmitting and receiving signals in a wired communication environment. The transceiver 1301 may include a wired interface for controlling a direct connection between a device and a device through a transmission medium (e.g., copper wire, or optical fiber). For example, the transceiver 1301 may transmit an electrical signal to another device through a copper wire, or may perform conversion between an electrical signal and an optical signal.

The transceiver 1301 may perform functions for transmitting and receiving signals in a wireless communication environment. For example, the transceiver 1301 may perform a conversion function between a baseband signal and a bit stream according to a physical layer standard of a system. For example, when transmitting data, the transceiver 1301 generates complex-valued symbols by encoding and modulating a transmission bit string. In addition, when receiving data, the transceiver 1301 restores a reception bit stream by demodulating and decoding the baseband signal. Also, the transceiver 1301 may include a plurality of transmission/reception paths.

The transceiver 1301 transmits and receives signals as described above. Accordingly, all or a portion of the transceiver 1301 may be referred to as a 'communication unit', a 'transmission unit', a 'reception unit', or a 'transmission/reception unit'. In addition, in the following description, transmission and reception performed through a wireless channel are used to include a processing as described above being performed by the transceiver 1301.

The processor 1303 controls overall operations of the base station 110. The processor 1303 may be referred to as a control unit. For example, the processor 1303 transmits and receives signals through the transceiver 1301 (or through the backhaul transceiver 1307). Furthermore, the processor 1303 writes and reads data to and from the memory 1305. In addition, the processor 1303 may perform functions of a protocol stack required by a communication standard. According to an embodiment, the processor 1303 may obtain an MMSE weight of a receiver included in the base station 110 based on an estimated channel using reception reference signals, an estimated noise and interference, and an additional diagonal load identified according to a receiver resolution. For example, the processor 1303 may perform an operation of FIGS. 8 and 10. Although only the processor 1303 is illustrated in FIG. 13, according to another implementation, the base station 110 may include two or more processors. For example, the processor 1303 may be operably (or operatively) coupled with the transceiver 1301, the memory 1305, or the backhaul transceiver 1307. For example, the processor 1303 being operably coupled with the transceiver 1301 may indicate that the processor 1301 is connected with the transceiver 1301 through another component of the base station 110. Alternatively, the processor 1303 being operably coupled with the transceiver 1301 may indicate that the transceiver 1301 is controlled by the processor 1303.

The processor 1303 may include various processing circuits and/or a plurality of processors. For example, a term "processor" used in the present document, including the scope of claims, may include various processing circuits including at least one processor, and one or more of the at least one processor may be configured to perform various functions described below individually and/or collectively in a distributed manner. As used below, in a case that "processor", "at least one processor", and "one or more processors" are described as configured to perform various functions, these terms, for example, are not limited to situations in which one processor performs a portion of cited functions, and situations in which another processor(s) performs another portion of the cited functions, and also one processor may perform all of the cited functions. Additionally, the at least one processor may include a combination of processors that perform various functions listed/disclosed, for example, in the distributed manner. The at least one processor may execute program instructions to achieve or perform various functions.

In the present disclosure, operations of the processor 1303 may mean being executed by software or controlling hardware components such as a Field Programmable Gate Array (FPGA) or an application-specific integrated circuit (ASIC). In addition, the processor 1303 may include at least one of components such as software components, object-oriented software components, class components, and task components, and processes, functions, properties, procedures, subroutines, segments of program code, drivers, firmware, microcode, circuitry, data, database, data structures, tables, arrays, and variables. The processor 1303 may include at least one module, and the term "module" includes a unit configured with hardware, software, or firmware. For example, the module may be used interchangeably with terms such as logic, logical block, component, or circuitry, and the like. The module may be an integrated component or a minimum unit performing one or more functions, or a portion thereof. For example, the module may be configured with ASIC.

The memory 1305 stores data such as a basic program, an application program, and setting information for an operation of the base station 110. The memory 1305 may be referred to as a storage unit. The memory 1305 may be configured with volatile memory, non-volatile memory, or a combination of the volatile memory and the non-volatile memory. In addition, the memory 1305 provides the stored data according to a request of the processor 1303.

The base station 110 may further include the backhaul transceiver 1307 for being connected with a core network or another base station. The backhaul transceiver 1307 provides an interface for performing communication with other nodes in a network. In other words, the backhaul transceiver 1307 converts a bit stream transmitted from a base station to another node, for example, another access node, another base station, an upper node, a core network, and the like, into a physical signal, and converts the physical signal received from the other node into the bit sting.

In embodiments, a method performed by a base station supporting dynamic spectrum sharing (DSS) for long term evolution (LTE) and new radio (NR) may comprise mapping first downlink data associated with the NR on resource elements (REs) in a data region of a subframe. The method may comprise identifying second partial data from among first partial data mapped to first REs according to a cell-specific reference signal (CRS) pattern associated with the LTE from among the REs, and the second partial data mapped to second REs different from the first REs. The first downlink data may include the first partial data and the second partial data. The method may comprise transmitting the second partial data on the second REs. The method may comprise, after establishing a radio resource control (RRC) connection with a terminal associated with the NR, mapping second downlink data on fourth REs excluding third REs according to a CRS pattern associated with the LTE, in REs of a data region in another subframe. The method may comprise transmitting the second downlink data on the fourth REs. The first downlink data may include a random access response (RAR), paging, or a system information block.

According to an embodiment, the first partial data may be discarded. CRS may be transmitted on the first REs.

According to an embodiment, a radio frame including the subframe may include at least one multimedia broadcast single frequency network (MBSFN) subframe. The subframe may be a subframe different from the at least one MBSFN subframe in the radio frame.

According to an embodiment, the method may comprise identifying the number of the REs of the data region in the subframe. The method may comprise mapping the first downlink data sequentially to the identified number of REs.

According to an embodiment, the method may comprise identifying the number of the fourth REs of the data region in the other subframe. The method may comprise mapping the second downlink data sequentially to the identified number of fourth REs.

According to an embodiment, the method may comprise, based on identifying that the first downlink data includes the RAR, the paging, or the system information block, deactivating an indicator indicating performing rate matching with respect to the first downlink data. The method may comprise, based on the deactivated indicator, mapping the first downlink data.

According to an embodiment, the method may comprise, after establishing the RRC connection with the terminal, activating the deactivated indicator. The method may comprise, based on the activated indicator, mapping the second downlink data.

In embodiments, a device of a base station supporting dynamic spectrum sharing (DSS) for long term evolution (LTE) and new radio (NR) may comprise a transceiver. The device may comprise a processor operatively coupled with the transceiver. The processor may be configured to map first downlink data associated with the NR on resource elements (REs) in a data region of a subframe. The processor may be configured to identify second partial data from among first partial data mapped to first REs according to a cell-specific reference signal (CRS) pattern associated with the LTE from among the REs, and the second partial data mapped to second REs different from the first REs. The first downlink data may include the first partial data and the second partial data. The processor may be configured to transmit the second partial data on the second REs. The processor may be configured to, after establishing a radio resource control (RRC) connection with a terminal associated with the NR, map second downlink data on fourth REs excluding third REs according to a CRS pattern associated with the LTE, in REs of a data region in another subframe. The processor may be configured to transmit the second downlink data on the fourth REs. The first downlink data may include a random access response (RAR), paging, or a system information block.

According to an embodiment, the first partial data may be discarded. CRS may be transmitted on the first REs.

According to an embodiment, a radio frame including the subframe may include at least one multimedia broadcast single frequency network (MBSFN) subframe. The subframe may be a subframe different from the at least one MBSFN subframe in the radio frame.

According to an embodiment, the processor may be configured to identify the number of the REs of the data region in the subframe. The processor may be configured to map the first downlink data sequentially to the identified number of REs.

According to an embodiment, the processor may be configured to identify the number of the fourth REs of the data region in the other subframe. The processor may be configured to map the second downlink data sequentially to the identified number of fourth REs.

According to an embodiment, the processor may be configured to, based on identifying that the first downlink data includes the RAR, the paging, or the system information block, deactivate an indicator indicating performing rate matching with respect to the first downlink data. The processor may be configured to, based on the deactivated indicator, map the first downlink data.

According to an embodiment, the processor may be configured to, after establishing the RRC connection with the terminal, activate the deactivated indicator. The processor may be configured to, based on the activated indicator, map the second downlink data.

In embodiments, a method performed by a device of a base station supporting dynamic spectrum sharing (DSS) for long term evolution (LTE) and new radio (NR) may comprise identifying, based on a radio resource control (RRC) connection state of a terminal associated with the NR, whether rate matching according to a cell-specific reference signal (CRS) pattern associated with the LTE is performed on downlink data associated with the NR. The method may comprise mapping, in a case that the rate matching is performed on the downlink data, the downlink data sequentially on second REs excluding first REs according to the CRS pattern from among resource elements (REs) of a data region in a subframe. The method may comprise mapping, in a case that the rate matching is not performed on the downlink data, mapping, the downlink data sequentially on the first REs and the second REs according to the CRS pattern from among the REs of the data region. The method may comprise transmitting the downlink data on the second REs.

According to an embodiment, CRS may be transmitted on the first REs.

According to an embodiment, the method may comprise, in a case that the downlink data includes a random access response (RAR), paging, or a system information block, deactivating an indicator indicating performing the rate matching with respect to the downlink data. The method may comprise, based on the deactivated indicator, mapping the downlink data sequentially to the first REs and the second REs.

According to an embodiment, a radio frame including the subframe may include at least one multimedia broadcast single frequency network (MBSFN) subframe. The subframe may be a subframe different from the at least one MBSFN subframe in the radio frame.

According to an embodiment, the method may comprise, in a case that the rate matching is performed on the downlink data, identifying the number of the second REs from among the REs. The method may comprise mapping the downlink data sequentially to the identified number of the second REs.

According to an embodiment, the method may comprise, in a case that the rate matching is not performed on the downlink data, identifying the number of the REs. The method may comprise mapping the downlink data sequentially to the identified number of the REs. A portion of the downlink data mapped to the first REs may be discarded.

In embodiments, a base station supporting dynamic spectrum sharing (DSS) for long term evolution (LTE) and new radio (NR) may comprise memory storing instructions. The base station may comprise at least one transceiver. The base station may comprise at least one processor. The instructions, when executed by the at least one processor individually and/or collectively, cause the base station to map first downlink data associated with the NR on resource elements (REs) in a data region of a subframe. The instructions, when executed by the at least one processor individually and/or collectively, cause the base station to identify second partial data from among first partial data mapped to first REs according to a cell-specific reference signal (CRS) pattern associated with the LTE from among the REs, and the second partial data mapped to second REs different from the first REs. The first downlink data may include the first partial data and the second partial data. The instructions, when executed by the at least one processor individually and/or collectively, cause the base station to transmit the second partial data on the second REs. The instructions, when executed by the at least one processor individually and/or collectively, cause the base station to, after establishing a radio resource control (RRC) connection with a terminal associated with the NR, map second downlink data on fourth REs excluding third REs according to a CRS pattern associated with the LTE, in REs of a data region in another subframe. The instructions, when executed by the at least one processor individually and/or collectively, cause the base station to transmit the second downlink data on the fourth REs. The first downlink data may include a random access response (RAR), paging, or a system information block.

According to an embodiment, the first partial data may be discarded. CRS is transmitted on the first REs.

According to an embodiment, a radio frame including the subframe may include at least one multimedia broadcast single frequency network (MBSFN) subframe. The subframe may be a subframe different from the at least one MBSFN subframe in the radio frame.

According to an embodiment, the instructions, when executed by the at least one processor individually and/or collectively, may cause the base station to identify the number of the REs of the data region in the subframe. The instructions, when executed by the at least one processor individually and/or collectively, cause the base station to map the first downlink data sequentially to the identified number of the REs.

According to an embodiment, the instructions, when executed by the at least one processor individually and/or collectively, cause the base station to identify the number of the fourth REs of the data region in the another subframe. The instructions, when executed by the at least one processor individually and/or collectively, cause the base station to map the second downlink data sequentially to the identified number of the fourth REs.

According to an embodiment, the instructions, when executed by the at least one processor individually and/or collectively, may cause the base station to, based on identifying that the first downlink data includes the RAR, the paging, or the system information block, deactivate an indicator indicating performing rate matching with respect to the first downlink data. The instructions, when executed by the at least one processor individually and/or collectively, cause the base station to, based on the deactivated indicator, map the first downlink data.

According to an embodiment, the instructions, when executed by the at least one processor individually and/or collectively, may cause the base station to, after establishing the RRC connection with the terminal, activate the deactivated indicator. The instructions, when executed by the at least one processor individually and/or collectively, cause the base station to, based on the activated indicator, map the second downlink data.

In embodiments, a non-transitory computer readable storage medium may store one or more programs comprising instructions which, when executed by at least one processor of a base station supporting dynamic spectrum sharing (DSS) for long term evolution (LTE) and new radio (NR) individually and/or collectively, cause the base station to map first downlink data associated with the NR on resource elements (REs) in a data region of a subframe. The non-transitory computer readable storage medium may store one or more programs comprising instructions which, when executed by the at least one processor individually and/or collectively, cause the base station to identify second partial data from among first partial data mapped to first REs according to a cell-specific reference signal (CRS) pattern associated with the LTE from among the REs, and the second partial data mapped to second REs different from the first REs. The first downlink data may include the first partial data and the second partial data. The non-transitory computer readable storage medium may store one or more programs comprising instructions to, when executed by the at least one processor individually and/or collectively, cause the base station to transmit the second partial data on the second REs. The non-transitory computer readable storage medium may store one or more programs comprising instructions which, when executed by the at least one processor individually and/or collectively, cause the base station to, after establishing a radio resource control (RRC) connection with a terminal associated with the NR, map second downlink data on fourth REs excluding third REs according to a CRS pattern associated with the LTE, in REs of a data region in another subframe. The non-transitory computer readable storage medium may store one or more programs comprising instructions which, when executed by the at least one processor individually and/or collectively, cause the base station to transmit the second downlink data on the fourth REs. The first downlink data may include a random access response (RAR), paging, or a system information block.

Methods according to embodiments described in claims or specifications of the present disclosure may be implemented as a form of hardware, software, or a combination of hardware and software.

In a case of implementing as software, a computer-readable storage medium for storing one or more programs (software module) may be provided. The one or more programs stored in the computer-readable storage medium are configured for execution by one or more processors in an electronic device. The one or more programs include instructions that cause the electronic device to execute the methods according to embodiments described in claims or specifications of the present disclosure. The one or more programs may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore™), or between two user devices (e.g., smart phones) directly. In the case of being distributed online, at least part of the computer program product may be temporarily generated or at least temporarily stored in the machine-readable storage medium, such as memory of the manufacturer's server, the application store's server, or a relay server.

Such a program (software module, software) may be stored in a random access memory, a non-volatile memory including a flash memory, a read only memory (ROM), an electrically erasable programmable read only memory (EEPROM), a magnetic disc storage device, a compact disc-ROM (CD-ROM), an optical storage device (digital versatile discs (DVDs) or other formats), or a magnetic cassette. Alternatively, it may be stored in memory configured with a combination of some or all of them. In addition, a plurality of configuration memories may be included.

Additionally, a program may be stored in an attachable storage device that may be accessed through a communication network such as the Internet, Intranet, local area network (LAN), wide area network (WAN), or storage area network (SAN), or a combination thereof. Such a storage device may be connected to a device performing an embodiment of the present disclosure through an external port. In addition, a separate storage device on the communication network may also be connected to a device performing an embodiment of the present disclosure.

In the above-described specific embodiments of the present disclosure, components included in the disclosure are expressed in the singular or plural according to the presented specific embodiment. However, the singular or plural expression is selected appropriately according to a situation presented for convenience of explanation, and the present disclosure is not limited to the singular or plural component, and even components expressed in the plural may be configured in the singular, or a component expressed in the singular may be configured in the plural.

According to various embodiments, one or more components or operations of the above-described components may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to various embodiments, operations performed by the module, the program, or another component may be executed sequentially, in parallel, repeatedly, or heuristically, or one or more of the operations may be executed in a different order or omitted, or one or more other operations may be added.

Meanwhile, specific embodiments have been described in the detailed description of the present disclosure, and of course, various modifications are possible without departing from the scope of the present disclosure.

**Claims**

1. A method performed by a base station supporting dynamic spectrum sharing (DSS) for long term evolution (LTE) and new radio (NR), the method comprising:

mapping first downlink data associated with the NR on resource elements (REs) in a data region of a subframe;
identifying second partial data from among first partial data mapped to first REs according to a cell-specific reference signal (CRS) pattern associated with the LTE from among the REs, and the second partial data mapped to second REs different from the first REs, the first downlink data including the first partial data and the second partial data;
transmitting the second partial data on the second REs;

after establishing a radio resource control (RRC) connection with a terminal associated with the NR, mapping second downlink data on fourth REs excluding third REs according to a CRS pattern associated with the LTE, in REs of a data region in another subframe; and

transmitting the second downlink data on the fourth REs,

wherein the first downlink data includes a random access response (RAR), paging, or a system information block.

2. The method of claim 1,

wherein the first partial data is discarded, and

wherein CRS is transmitted on the first REs.

3. The method of claim 1,

wherein a radio frame including the subframe includes at least one multimedia broadcast single frequency network (MBSFN) subframe, and

wherein the subframe is a subframe different from the at least one MBSFN subframe in the radio frame.

4. The method of claim 1, comprising:

identifying the number of the REs of the data region in the subframe; and

mapping the first downlink data sequentially to the identified number of the REs.

5. The method of claim 1, comprising:

identifying the number of the fourth REs of the data region in the another subframe; and

mapping the second downlink data sequentially to the identified number of the fourth REs.

6. The method of claim 1, comprising:

based on identifying that the first downlink data includes the RAR, the paging, or the system information block, deactivating an indicator indicating performing rate matching with respect to the first downlink data; and

based on the deactivated indicator, mapping the first downlink data.

7. The method of claim 6, comprising:

after establishing the RRC connection with the terminal, activating the deactivated indicator; and

based on the activated indicator, mapping the second downlink data.

8. A base station supporting dynamic spectrum sharing (DSS) for long term evolution (LTE) and new radio (NR), the base station comprising:

memory storing instructions;

at least one transceiver; and

at least one processor;

wherein the instructions, when executed by the at least one processor individually and/or collectively, cause the base station to:

map first downlink data associated with the NR on resource elements (REs) in a data region of a subframe;

identify second partial data from among first partial data mapped to first REs according to a cell-specific reference signal (CRS) pattern associated with the LTE from among the REs, and the second partial data mapped to second REs different from the first REs, the first downlink data including the first partial data and the second partial data;

transmit the second partial data on the second REs;

after establishing a radio resource control (RRC) connection with a terminal associated with the NR, map second downlink data on fourth REs excluding third REs according to a CRS pattern associated with the LTE, in REs of a data region in another subframe; and

transmit the second downlink data on the fourth REs,

wherein the first downlink data includes a random access response (RAR), paging, or a system information block.

9. The base station of claim 8,

   wherein the first partial data is discarded, and
   wherein CRS is transmitted on the first REs.

10. The base station of claim 8,

    wherein a radio frame including the subframe includes at least one multimedia broadcast single frequency network (MBSFN) subframe, and
    wherein the subframe is a subframe different from the at least one MBSFN subframe in the radio frame.

11. The base station of claim 8,
    wherein the instructions, when executed by the at least one processor individually and/or collectively, cause the base station to:

    identify the number of the REs of the data region in the subframe; and
    map the first downlink data sequentially to the identified number of the REs.

12. The base station of claim 8,
    wherein the instructions, when executed by the at least one processor individually and/or collectively, cause the base station to:

    identify the number of the fourth REs of the data region in the another subframe; and
    map the second downlink data sequentially to the identified number of the fourth REs.

13. The base station of claim 8,
    wherein the instructions, when executed by the at least one processor individually and/or collectively, cause the base station to:

    based on identifying that the first downlink data includes the RAR, the paging, or the system information block, deactivate an indicator indicating performing rate matching with respect to the first downlink data; and
    based on the deactivated indicator, map the first downlink data.

14. The base station of claim 13,
    wherein the instructions, when executed by the at least one processor individually and/or collectively, cause the base station to:

    after establishing the RRC connection with the terminal, activate the deactivated indicator; and
    based on the activated indicator, map the second downlink data.

15. A non-transitory computer readable storage medium storing one or more programs, the one or more programs comprising instructions to, when executed by at least one processor of a base station supporting dynamic spectrum sharing (DSS) for long term evolution (LTE) and new radio (NR) individually and/or collectively, cause the base station to:

    map first downlink data associated with the NR on resource elements (REs) in a data region of a subframe;
    identify second partial data from among first partial data mapped to first REs according to a cell-specific reference signal (CRS) pattern associated with the LTE from among the REs, and the second partial data mapped to second REs different from the first REs, the first downlink data including the first partial data and the second partial data;
    transmit the second partial data on the second REs;
    after establishing a radio resource control (RRC) connection with a terminal associated with the NR, map second downlink data on fourth REs excluding third REs according to a CRS pattern associated with the LTE, in REs of a data region in another subframe; and
    transmit the second downlink data on the fourth REs, and
    wherein the first downlink data includes a random access response (RAR), paging, or a system information block.

FIG. 1

FIG. 2

RADIO FRAME (304)

SUBFRAME (303)

SLOT (302)

RESOURCE ELEMENT (306)

RESOURCE BLOCK (307)

$N_{RB}$ SUBCARRIERS (308)

$N_{RB}^{DL}$ OR $N_{RB}^{UL}$ SUBCARRIERS (305)

$N_{symb}$ OFDM SYMBOLS (301)

Time

Frequency

FIG. 3

FIG. 4

FIG. 5A

560

SET OF MODULATED PDSCH SYMBOLS

| 0 | 1 | ⋯ | m | m+1 | m+2 | m+3 | m+4 | m+5 | m+6 | m+7 | m+8 | m+9 | ⋯ | M-2 | M-1 |

PDSCH MAPPING CONSIDERING RATE-MATCHING

505

571   572  573  574

575

576

577

578   579   OFDM Symbol

■ : LTE CRS (510)   ▨ : LTE PDCCH (520)   ▒ : NR PDCCH (530)

▧ : NR DMRS (540)   □ : NR PDSCH (550)

FIG. 5B

FIG. 6

700

710

| NR/LTE DSS | NR only OSI | NR/LTE DSS | NR/LTE DSS | NR/LTE DSS | NR/LTE DSS | NR only SSB SIB1 RAR Paging | NR/LTE DSS | NR/LTE DSS | NR/LTE DSS |
|---|---|---|---|---|---|---|---|---|---|
| Subfrm0 | Subfrm1 (MBSFN) | Subfrm2 | Subfrm3 | Subfrm4 | Subfrm5 | Subfrm6 (MBSFN) | Subfrm7 | Subfrm8 | Subfrm9 |

720

FIG. 7A

FRAME BOUNDARY

PREVIOUS FRAME (760) | CURRENT FRAME (770)

750

SUBFRAME SECTION WHERE RACH TRANSMISSION IS POSSIBLE (765) | SUBFRAME SECTION WHERE RACH TRANSMISSION IS IMPOSSIBLE

772

| RACH | RACH | RACH | RACH | RACH | | | | | | RAR |

Subfrm6 | Subfrm7 | Subfrm8 | Subfrm9 | Subfrm0 | Subfrm1 | Subfrm2 | Subfrm3 | Subfrm4 | Subfrm5 | Subfrm6 (MBSFN)

761 | 762 | 763 | 764 | 771

RAR PROCESSING TIME (780)

RAR WINDOW (790)

FIG. 7B

FIG. 8

SET OF MODULATED PDSCH SYMBOLS

960

| 0 | 1 | ⋯ | m | m+1 | m+2 | m+3 | m+4 | m+5 | m+6 | m+7 | m+8 | m+9 | m+10 | m+11 | ⋯ | M-2 | M-1 |

PDSCH MAPPING NOT CONSIDERING RATE-MATCHING

900

971 972 973 974

975

976

977

Subcarrier

0 1 2 3 4 5 6 7 8 9 10 11 12 13

978 979 OFDM Symbol

■ : LTE CRS (910)   ▨ : LTE PDCCH (920)   ▨ : NR PDCCH (930)

▨ : NR DMRS (940)   □ : NR PDSCH (950)

FIG. 9

MAP FIRST DOWNLINK DATA ASSOCIATED WITH NR ON RES OF DATA REGION IN SUBFRAME — 1000

IDENTIFY FIRST PARTIAL DATA MAPPED TO FIRST RES ACCORDING TO CRS PATTERN AND SECOND PARTIAL DATA MAPPED TO SECOND RES — 1010

TRANSMIT SECOND PARTIAL DATA ON SECOND RES — 1020

AFTER ESTABLISHING RRC CONNECTION, MAP SECOND DOWNLINK DATA ON FOURTH RES EXCLUDING THIRD RES ACCORDING TO CRS PATTERN IN RES OF DATA REGION IN ANOTHER SUBFRAME — 1030

TRANSMIT SECOND DOWNLINK DATA ON FOURTH RES — 1040

FIG. 10

1110    1120

1100

1140

TIME UNTIL RAR RECEPTION AFTER
RACH TRANSMISSION (1145)

1130

| | RACH | | | | | | | | | RAR |
|---|---|---|---|---|---|---|---|---|---|---|
| Subfrm6 | Subfrm7 | Subfrm8 | Subfrm9 | Subfrm0 | Subfrm1 | Subfrm2 | Subfrm3 | Subfrm4 | Subfrm5 | Subfrm6 (MBSFN) |

EXAMPLE OF RAR TRANSMISSION IN MBSFN SUBFRAME

1110    1120

1105

TIME UNTIL RAR RECEPTION
AFTER RACH TRANSMISSION (1155)

1130    RAR PROCESSING TIME (1160)    1150

| | RACH | | | | | | RAR | | | |
|---|---|---|---|---|---|---|---|---|---|---|
| Subfrm6 | Subfrm7 | Subfrm8 | Subfrm9 | Subfrm0 | Subfrm1 | Subfrm2 | Subfrm3 | Subfrm4 | Subfrm5 | Subfrm6 (MBSFN) |

EXMAPLE OF RAR TRANSMISSION IN REGULAR LTE SUBFRAME

FIG. 11

120

TRANSCEIVER (1201)

PROCESSOR (1203)

MEMORY (1205)

FIG. 12

110

TRANSCEIVER (1301)

PROCESSOR (1303)

MEMORY (1305)

BACKHAUL
TRANSCEIVER (1307)

FIG. 13

## INTERNATIONAL SEARCH REPORT

| International application No. |
|---|
| **PCT/KR2024/000788** |

| A. | CLASSIFICATION OF SUBJECT MATTER |
|---|---|

**H04W 16/14**(2009.01)i; **H04W 72/12**(2009.01)i; **H04W 16/10**(2009.01)i; **H04W 72/04**(2009.01)i; **H04W 72/23**(2023.01)i; **H04W 72/30**(2023.01)i; **H04L 5/00**(2006.01)i; **H04W 68/02**(2009.01)i

According to International Patent Classification (IPC) or to both national classification and IPC

| B. | FIELDS SEARCHED |
|---|---|

Minimum documentation searched (classification system followed by classification symbols)

H04W 16/14(2009.01); H04L 1/00(2006.01); H04L 5/00(2006.01); H04W 28/02(2009.01); H04W 72/12(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: DSS(dynamic spectrum sharing), LTE, NR, subframe, REs, downlink data, CRS pattern, mapping, rate matching, RAR, paging, SIB, discard, MBSFN subframe, activation/inactivation indicator

| C. | DOCUMENTS CONSIDERED TO BE RELEVANT |
|---|---|

| Category* | Citation of document, with indication, where appropriate, of the relevant passages | Relevant to claim No. |
|---|---|---|
| X | MEDIATEK. 5G NR and 4G LTE Coexistence: A Comprehensive Deployment Guide to Dynamic Spectrum Sharing. White Paper. 09 October 2020. [Retrieved on 11 April 2024]. Retrieved from <URL: https://www.finetopix.com/showthread.php/53733-5G-NR-and-4G-LTE-Coexistence-by-MediaTek>. See pages 2-29; and figures 1-22. | 1-5,8-12,15 |
| Y | | 6-7,13-14 |
| Y | US 2021-0091880 A1 (SAMSUNG ELECTRONICS CO., LTD.) 25 March 2021 (2021-03-25) See claim 16. | 6-7,13-14 |
| A | US 2023-0026727 A1 (AT&T INTELLECTUAL PROPERTY I, L.P.) 26 January 2023 (2023-01-26) See paragraphs [0031]-[0082]; claim 1; and figures 1-10. | 1-15 |
| A | US 2022-0360998 A1 (SAMSUNG ELECTRONICS CO., LTD.) 10 November 2022 (2022-11-10) See paragraphs [0061]-[0109]; and figures 5-11. | 1-15 |

| ✓ Further documents are listed in the continuation of Box C. | ✓ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **30 April 2024** | **30 April 2024** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2024/000788**

| C. | DOCUMENTS CONSIDERED TO BE RELEVANT | |
|---|---|---|
| Category* | Citation of document, with indication, where appropriate, of the relevant passages | Relevant to claim No. |
| A | US 2022-0322130 A1 (TELEFONAKTIEBOLAGET LM ERICSSON (PUBL)) 06 October 2022 (2022-10-06)<br>See paragraphs [0029]-[0057]. | 1-15 |

Form PCT/ISA/210 (second sheet) (July 2022)

**INTERNATIONAL SEARCH REPORT**
Information on patent family members

International application No.

**PCT/KR2024/000788**

| Patent document cited in search report | | | Publication date (day/month/year) | Patent family member(s) | | | Publication date (day/month/year) |
|---|---|---|---|---|---|---|---|
| US | 2021-0091880 | A1 | 25 March 2021 | KR | 10-2019-0101809 | A | 02 September 2019 |
| | | | | KR | 10-2480931 | B1 | 23 December 2022 |
| | | | | US | 11646816 | B2 | 09 May 2023 |
| | | | | US | 2023-0275688 | A1 | 31 August 2023 |
| | | | | WO | 2019-164236 | A1 | 29 August 2019 |
| US | 2023-0026727 | A1 | 26 January 2023 | US | 11490404 | B2 | 01 November 2022 |
| | | | | US | 2021-0058953 | A1 | 25 February 2021 |
| US | 2022-0360998 | A1 | 10 November 2022 | CN | 115314154 | A | 08 November 2022 |
| | | | | EP | 4087173 | A1 | 09 November 2022 |
| | | | | KR | 10-2022-0152110 | A | 15 November 2022 |
| US | 2022-0322130 | A1 | 06 October 2022 | EP | 3987708 | A1 | 27 April 2022 |
| | | | | EP | 3987708 | B1 | 02 August 2023 |
| | | | | WO | 2020-261095 | A1 | 30 December 2020 |

Form PCT/ISA/210 (patent family annex) (July 2022)